# EUROPEAN PATENT APPLICATION

(11) **EP 3 955 137 A1**
(43) Date of publication of application: **16.02.2022**
(21) Application number: 20786981.9
(22) Date of filing: 03.04.2020
(51) Int. Cl.: G06F 16/907, G06F 3/01, G06F 16/906

(54) **INFORMATION PROCESSING DEVICE, INFORMATION PROCESSING METHOD, AND PROGRAM**

(30) Priority: 10.04.2019 JP 2019074616
(71) Applicant: Sony Group Corporation, Tokyo 108-0075 (JP)
(72) Inventor: ITO, Osamu, Tokyo 108-0075 (JP); JIN, Yufeng, Tokyo 108-0075 (JP)
(74) Representative: MFG Patentanwälte Meyer-Wildhagen Meggle-Freund Gerhard PartG mbB
(86) International application number: PCT/JP2020/015265
(87) International publication number: WO 2020/209185

(57) **Abstract**

Provided is an information processing apparatus including a retrieval unit that retrieves a piece of tactile sense presentation information for realizing a tactile sense presented to a user from a tactile sense database including the piece of the tactile sense presentation information and one or more pieces of tactile sense meta information associated with the piece of the tactile sense presentation information, based on tactile sense retrieval information used for retrieving the piece of the tactile sense presentation information, and an output unit that outputs information related to the retrieved piece of the tactile sense presentation information.

## Description

### Field

The present disclosure relates to an information processing apparatus, an information processing method, and a program.

### Background

Conventionally, there has been proposed a technique for presenting, to a user, various types of information perceived through a tactile sense of the user, such as a vibration stimulus. For example, Patent Literature 1 discloses a technique of generating a signal configured to cause a tactile sense effect according to a predetermined condition and outputting the generated signal to a tactile sense presentation device.

### Citation List

### Patent Literature

Patent Literature 1: JP 2017-194981 A

### Summary

### Technical Problem

As described above, conventionally, a technique for presenting a tactile sense to a user has been proposed. On the other hand, as a large number of various types of information related to the tactile sense as described above are accumulated, if information desired by the user can be retrieved from the accumulated information related to the tactile sense as if a word was retrieved in a dictionary, it is considered that the convenience of the user can be further improved.

Therefore, the present disclosure proposes a novel and improved information processing apparatus, information processing method, and program capable of providing information for more appropriately realizing a tactile sense desired by a user based on information for retrieving the tactile sense.

### Solution to Problem

According to the present disclosure, an information processing apparatus is provided that includes: a retrieval unit that retrieves a piece of tactile sense presentation information for realizing a tactile sense presented to a user from a tactile sense database including the piece of tactile sense presentation information and one or more pieces of tactile sense meta information associated with the piece of tactile sense presentation information, based on tactile sense retrieval information used for retrieving the piece of tactile sense presentation information; and an output unit that outputs information related to the retrieved piece of tactile sense presentation information.

Moreover, according to the present disclosure, an information processing method is provided that includes: retrieving, by a processor, a piece of tactile sense presentation information for realizing a tactile sense presented to a user from a tactile sense database including the piece of the tactile sense presentation information and one or more pieces of tactile sense meta information associated with the piece of the tactile sense presentation information, based on tactile sense retrieval information used for retrieving the piece of the tactile sense presentation information; and outputting, by the processor, information related to the retrieved piece of the tactile sense presentation information.

Moreover, according to the present disclosure, a program is provided that causes a computer to function as an information processing apparatus including: a retrieval unit that retrieves a piece of tactile sense presentation information for realizing a tactile sense presented to a user from a tactile sense database including the piece of the tactile sense presentation information and one or more pieces of tactile sense meta information associated with the piece of the tactile sense presentation information, based on tactile sense retrieval information used for retrieving the piece of the tactile sense presentation information; and an output unit that outputs information related to the retrieved piece of the tactile sense presentation information.

### Brief Description of Drawings

FIG. 1 is a diagram illustrating a configuration of an information processing system according to an embodiment of the present disclosure.
FIG. 2 is a diagram illustrating an example of a data structure of a tactile sense database.
FIG. 3 is a list illustrating an example of tactile sense meta information types.
FIG. 4 is a functional block diagram illustrating a configuration of an information processing apparatus according to the embodiment of the present disclosure.
FIG. 5 is a diagram for describing an example of an update of a tactile sense database by an update unit.
FIG. 6 is a diagram for describing an example in which the update unit updates a tactile sense database based on a relationship between two tactile sense meta information groups.
FIG. 7 is a diagram for describing an example in which the update unit updates a tactile sense database based on a relationship between two tactile sense meta information groups.
FIG. 8 is a functional block diagram illustrating a configuration of a processing unit.
FIG. 9 is a diagram illustrating a signal waveform of vibration as an example of the retrieved tactile sense presentation information.
FIG. 10 is a diagram illustrating a frequency spectrum of the signal waveform illustrated in FIG. 9.
FIG. 11 is a functional block diagram illustrating a configuration of a user terminal.
FIG. 12 is a diagram illustrating a state in which the tactile sense presentation information is retrieved.
FIG. 13 is a diagram illustrating signal waveforms of vibration related to a tactile sense presented to a user.
FIG. 14 is a flowchart illustrating a flow of updating a tactile sense database by the information processing apparatus according to the embodiment of the present disclosure.
FIG. 15 is a flowchart illustrating update processing of the tactile sense database.
FIG. 16 is a flowchart illustrating an outline of a processing example by the information processing apparatus and the user terminal according to the embodiment of the present disclosure.
FIG. 17 is a flowchart illustrating a first specific example by the information processing apparatus and the user terminal according to the embodiment of the present disclosure.
FIG. 18 is a flowchart illustrating a second specific example by the information processing apparatus and the user terminal according to the embodiment of the present disclosure.
FIG. 19 is a flowchart illustrating a first application example of processing of the information processing apparatus and the user terminal according to the embodiment of the present disclosure.
FIG. 20 is a flowchart illustrating a second application example of processing of the information processing apparatus and the user terminal according to the embodiment of the present disclosure.
FIG. 21 is a functional block diagram illustrating an example of a hardware configuration of the information processing apparatus according to the embodiment of the present disclosure.

### Description of Embodiments

Hereinafter, preferred embodiments of the present disclosure will be described in detail with reference to the accompanying drawings. Note that, in the present specification and the drawings, components having substantially the same functional configuration are denoted by the same reference numerals, and redundant description is omitted.

Note that the description will be given in the following order.
1. Overall configuration of information processing system
   1.1. Tactile sense database
   1.2. Configuration and function of information processing apparatus
   1.3. Configuration and function of user terminal
2. Update example
3. Processing example
   3.1. Outline of processing example
   3.2. First specific example
   3.3. Second specific example
4. Application example
   4.1. First application example
   4.2. Second application example
5. Hardware configuration example
6. Supplement

### <1. Overall configuration of information processing system>

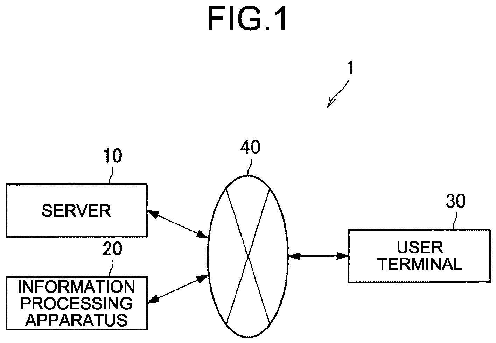

First, an information processing system 1 according to an embodiment of the present disclosure will be described with reference to FIG. 1. FIG. 1 is a diagram illustrating a configuration of the information processing system 1 according to the embodiment of the present disclosure. The information processing system 1 according to the embodiment of the present disclosure includes a server 10, an information processing apparatus 20, and a user terminal 30. The server 10, the information processing apparatus 20, and the user terminal 30 are connected to one another via a network 40.

Note that the network 40 may include a public line network such as a telephone line network, the Internet, or a satellite communication network, a local area network (LAN), a wide area network (WAN), or the like. In addition, the network 40 may include a dedicated line network such as an Internet Protocol-Virtual Private Network (IP-VPN).

The server 10 stores information collected based on various known services such as a social networking service (SNS). More specifically, the server 10 stores information transmitted by a user based on the SNS or the like. For example, the information stored in the server 10 includes tactile sense presentation information for realizing a tactile sense. In addition, the tactile sense presentation information may be stored in the server 10 together with at least one of various types of information such as text information, image information, or audio information. Various types of information stored in the server 10 are transmitted to the information processing apparatus 20 via the network 40 if necessary. Note that, in the present specification, the tactile sense may be various types of senses felt on the skin, such as a pressure sense, a force sense, a pain sense, or a temperature, in addition to the sense perceived by a vibration stimulus.

The information processing apparatus 20 retrieves, from a tactile sense database, tactile sense presentation information for realizing the tactile sense presented to the user based on tactile sense retrieval information. In addition, the information processing apparatus 20 transmits the retrieved tactile sense presentation information to the user terminal 30. Note that, in the present embodiment, the tactile sense database is stored in the information processing apparatus 20, but the tactile sense database may be stored in any of the server 10, the information processing apparatus 20, or the user terminal 30. Details of the data structure of the tactile sense database will be described later.

The user terminal 30 presents a tactile sense to the user based on the information related to the tactile sense presentation information transmitted from the information processing apparatus 20. The user terminal 30 presents a tactile sense, for example, by giving a vibration stimulus to the user's hand or the like. In addition, the user terminal 30 has a function of displaying various types of information such as a retrieval result of the tactile sense presentation information by the information processing apparatus 20.

### <<1.1. Tactile sense database>>

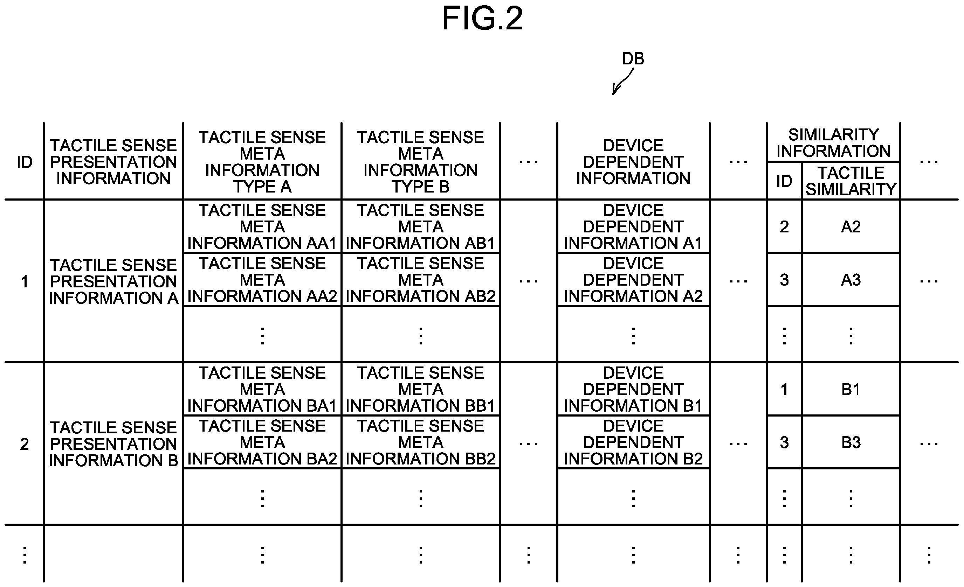

Here, an example of the data structure of the tactile sense database will be described with reference to FIG. 2. FIG. 2 is a diagram illustrating an example of the data structure of a tactile sense database DB. The tactile sense database DB includes tactile sense presentation information and one or more pieces of tactile sense meta information associated with the tactile sense presentation information. Here, the tactile sense meta information is information for classifying the tactile sense presentation information. Furthermore, the tactile sense database DB according to the present embodiment preferably includes device dependent information depending on a device on which a tactile sense is presented.

As illustrated in FIG. 2, a plurality of pieces of tactile sense presentation information is stored in the tactile sense database DB. For example, pieces of tactile sense presentation information A and tactile sense presentation information B are illustrated in the tactile sense database DB of FIG. 2. Note that, although the two pieces of tactile sense presentation information are illustrated in FIG. 2, three or more pieces of tactile sense presentation information may be stored in the tactile sense database DB.

The tactile sense presentation information is information for realizing the tactile sense presented to the user. More specifically, the user terminal 30 generates, for example, vibration corresponding to the tactile sense presentation information based on the tactile sense presentation information, thereby presenting the tactile sense to the user. For example, the tactile sense presentation information may be information representing a signal waveform of the vibration presented to the user. In addition, the tactile sense presentation information may be data representing one or a plurality of parameters extracted from the signal waveform of the vibration presented to the user.

One or more pieces of tactile sense meta information are associated with these types of tactile sense presentation information. In the tactile sense database DB illustrated in FIG. 2, the tactile sense meta information is stored for each of tactile sense meta information types into which the pieces of tactile sense meta information are classified. FIG. 2 illustrates two types of tactile sense meta information, which are a tactile sense meta information type A and a tactile sense meta information type B. Note that the number of types of tactile sense meta information stored in the tactile sense database DB may be one or three or more.

FIG. 2 illustrates, for example, tactile sense meta information AA1 and tactile sense meta information AA2 of the tactile sense meta information type A, and tactile sense meta information AB1 and tactile sense meta information AB2 of the tactile sense meta information type B, as the tactile sense meta information associated with the tactile sense presentation information A. Furthermore, with the tactile sense presentation information B, the tactile sense meta information of each of the tactile sense meta information type A and the tactile sense meta information type B may also be associated. In addition, the plurality of pieces of tactile sense presentation information may include shared tactile sense meta information.

FIG. 2 illustrates two pieces of tactile sense meta information of the tactile sense meta information type A as the tactile sense meta information associated with the tactile sense presentation information A, but tactile sense meta information on one or three pieces of tactile sense meta information of tactile sense meta information type A may be associated with the tactile sense presentation information A. Note that, for other tactile sense meta information types, one or more pieces of tactile sense meta information may be associated with each type of tactile sense presentation information. In addition, pieces of tactile sense meta information related to all the tactile sense meta information types may not be necessarily associated with the tactile sense presentation information.

For example, when a device presents a tactile sense based on tactile sense presentation information representing a certain signal waveform, the tactile sense that the user feels differs depending on a shape, mechanism, or the like of the device presenting the tactile sense. Therefore, with one piece of tactile sense presentation information, it is difficult to present an appropriate tactile sense to different devices. Therefore, in order for the device to present an appropriate tactile sense, it is necessary to process the tactile sense presentation information into information corresponding to the device. Thus, by processing the tactile sense presentation information using the device dependent information, the user can feel an appropriate tactile sense corresponding to the device.

In the tactile sense database DB according to the present embodiment, each piece of tactile sense presentation information is associated with the device dependent information. Here, the device dependent information is information corresponding to a device that presents a tactile sense based on the tactile sense presentation information. More specifically, the device dependent information is information for converting the tactile sense presentation information into information corresponding to the device. Such a device may be provided, for example, in a tactile sense presentation unit to be described later included in the user terminal 30.

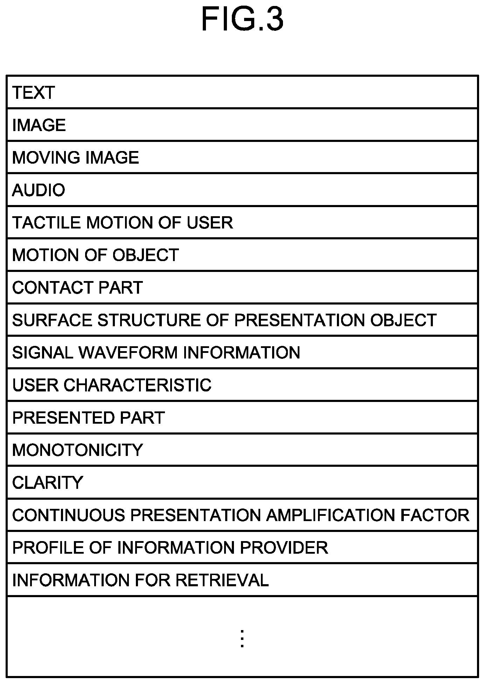

The data structure of the tactile sense database DB has been described. When the tactile sense presentation information is retrieved from the tactile sense database DB, tactile sense retrieval information is used. The tactile sense retrieval information is information that can be compared with the tactile sense meta information, and is information related to expectation of a tactile sense desired by the user. More specifically, the tactile sense retrieval information is information having contents as listed in a list of tactile sense meta information types which will be described later with reference to FIG. 3. Further, the tactile sense retrieval information may be tactile sense presentation information itself, or may be information obtained by combining the tactile sense presentation information and processing information. The processing information may be, for example, information for processing the tactile sense presentation information into information corresponding to the device in order for the device to present the tactile sense. When the tactile sense presentation information is retrieved, for example, the same or similar tactile sense meta information as or to the tactile sense retrieval information is found, and the tactile sense presentation information associated with the found tactile sense meta information is retrieved. A tactile sense is presented to the user based on the retrieved tactile sense presentation information. Note that a method of retrieving the tactile sense presentation information described herein is merely an example of a retrieval method, and a method of retrieving the tactile sense presentation information using the tactile sense database DB is not limited to such a retrieval method.

Next, a specific example of the above-described tactile sense meta information type will be described in detail with reference to FIG. 3. FIG. 3 is a list illustrating an example of tactile sense meta information types. Hereinafter, the tactile sense meta information types illustrated in FIG. 3 will be described in order from the top.

For example, the tactile sense meta information type may be a text. The tactile sense meta information of the text may be, for example, text information such as "fluffy". The text information may be associated with, for example, tactile sense presentation information for realizing a fluffy tactile sense.

The tactile sense meta information type may be a still image. The tactile sense meta information of the still image may be, for example, image information such as a photograph or a sticker. For example, the image information may be information representing a still image including an image of a chick. The image information of the chick may evoke a "fluffy" tactile sense of the chick's hair. Therefore, the image information may be associated with, for example, tactile sense presentation information for realizing a fluffy tactile sense. In addition, the tactile sense meta information type may be a moving image in addition to a still image.

Furthermore, the tactile sense meta information type may include audio information regarding audio of the user. The audio information may be information regarding a speed, pitch, or feeling of the utterance of the user. The tactile sense presentation information stored in the tactile sense database is retrieved using, for example, tactile sense retrieval information input by the user. Here, the tactile sense retrieval information may be audio of the user. In this case, the information processing apparatus 20 may extract information regarding the speed, pitch, or feeling of the utterance from the input audio. The tactile sense retrieval information may be retrieved by comparing the extracted information with tactile sense meta information that is audio information stored in the tactile sense database. For example, it is assumed that the user inputs the content of utterance "fluffy" as the tactile sense retrieval information. Here, the audio information may include information estimated from the speed or the like of the utterance, for example, information regarding a feeling of the user, in addition to character information of "fluffy". Therefore, inclusion of the audio information in the tactile sense meta information enables provision of information for realizing the tactile sense more appropriately according to, for example, the user's feeling or the like.

Furthermore, the tactile sense meta information type may be a tactile motion. Here, a tactile motion of the user is an operation of the user to whom the tactile sense is presented. The tactile sense meta information of the tactile motion of the user may be motion data such as a vector related to motion data representing a motion (movement) of a finger or the like of the user who touches the device or the like. In addition, the tactile sense meta information of the tactile motion of the user may be a physical quantity such as an acceleration, a speed, and a displacement amount of the user, or unit time conversion thereof. The information regarding the tactile motion is information that can more directly express the tactile sense desired by the user. Therefore, when the tactile sense meta information includes the information regarding the tactile motion, the information for realizing the tactile sense desired by the user is more appropriately provided.

Furthermore, the tactile sense meta information type may be a motion of an object. More specifically, the tactile sense meta information type may be a motion of an object (hereinafter, also referred to as a "presentation object") assumed as a tactile sense presented to the user. The tactile sense meta information related to a motion of the presentation object may be, for example, motion data such as a vector of motion data of the presentation object. In addition, the tactile sense meta information related to the motion of the presentation object may be an acceleration, a speed, and a displacement amount of the presentation object, or a physical quantity such as unit time conversion thereof.

Furthermore, the tactile sense meta information type may be a part of the user where the device comes into contact and the tactile sense is presented (hereinafter, also referred to as a "contact part"). Generally, the way that the user feels the tactile sense differs depending on the contact part. Therefore, the tactile sense corresponding to the tactile sense meta information of the contact part is presented to the user, whereby the tactile sense desired by the user is more appropriately presented.

Furthermore, the tactile sense meta information type may be a surface structure of the presentation object. The tactile sense meta information regarding the surface structure of the presentation object may be, for example, information regarding unevenness, hardness, or softness of the surface of the presentation object.

Furthermore, the tactile sense meta information type may be signal waveform information. The signal waveform information is information regarding a signal waveform representing a tactile sense presented to the user. The tactile sense meta information related to the signal waveform information may be, for example, information such as a frequency characteristic of a signal waveform, a beat component, a ratio of a low-frequency sound component, a ratio of a highfrequency sound component, or attack decay sustain release (ASRD). Here, the ADSR is four parameters related to the characteristic shape of a sound waveform, and examples thereof can include parameters representing attack, decay, sustain after the decay, and release.

Furthermore, the tactile sense meta information type may be a user characteristic of a user to whom tactile sense is presented. The tactile sense meta information of the user characteristic may be user information representing the user characteristic. For example, the user information may be, for example, information such as an age or a physical constitution. When the tactile sense meta information includes the user information, information for realizing the tactile sense corresponding to the user characteristic is appropriately provided to the user. Furthermore, in a case where the tactile sense meta information type is the age of the user whose tactile sense is presented, the age restriction may be applied according to the content of the tactile sense presentation information, the part of the user to whom tactile sense is presented, or the like.

Furthermore, the tactile sense meta information type may be a type of a presented part which is a part of the user where the tactile sense is presented. Generally, a frequency of vibration that is easily felt varies depending on the part where the tactile sense is presented to the user. Therefore, by associating the tactile sense meta information regarding the presented part with the tactile sense presentation information, it is possible to present the tactile sense adapted to the presented part.

Furthermore, as the tactile sense presentation information, a waveform signal adapted to the presented part may be stored in the tactile sense database DB. For example, only the waveform signal for presenting a tactile sense to a palm may be stored in the tactile sense database DB as the tactile sense presentation information. In this case, for parts other than the palm, parameters adapted to the respective parts are stored in the tactile sense database DB as the tactile sense presentation information. In a case where a tactile sense is presented at a part other than the palm, a waveform signal for presenting the tactile sense to the palm is processed based on a parameter adapted to the part where the tactile sense is presented. A tactile sense is presented to the user based on the processed information. More specifically, differences in frequency from that for the palm may be stored in the tactile sense database DB, as parameters for the parts other than the palm. When the tactile sense is presented to the user, the frequency of the waveform signal for presenting the tactile sense to the palm is corrected to a desired frequency by such a difference. Note that the basic signal waveform is not limited to a signal waveform for presenting the tactile sense to the palm, and may be based on a signal waveform related to another part. As a result, the tactile sense database DB does not need to store the waveform signal corresponding to each of parts where the tactile sense is presented. Therefore, the tactile sense database DB only needs to store the information of the parameters realized with a smaller data amount than that of the information of the waveform signals, and thus the tactile sense database DB can be realized with a smaller data amount. Note that the processing of the waveform signal and the like are performed by, for example, a processor 252 to be described later.

Furthermore, the tactile sense meta information type may be a type of information regarding a frequency of a signal waveform realized by the tactile sense presentation information. For example, the tactile sense meta information type may be monotonicity, clarity, or the like of the signal waveform. Here, the monotonicity is a degree of frequency change per unit time or a degree of amplitude change per unit time in the signal waveform representing the presented tactile sense. In addition, the tactile sense meta information type may be clarity. The clarity is, for example, a degree of coarseness or clearness. Generally, when more types of frequencies are included in a waveform signal per unit time representing the tactile sense, such a tactile sense is more "coarse". On the other hand, when fewer types of frequencies are included in a waveform signal per unit time representing the tactile sense, such a tactile sense is more "clear".

Furthermore, the tactile sense meta information type may be a continuous presentation amplification factor. The tactile sense meta information related to the continuous presentation amplification factor is, for example, a parameter for enhancing a strength of the presented tactile sense with elapse of time according to the content of the presented tactile sense or the part where the tactile sense is presented. Generally, when a tactile sense is continuously presented to the same part of the body, a human becomes accustomed to the sense (or numbs) at the part where the tactile sense is presented. Therefore, when a stimulus of the same strength is presented, a human feels that the stimulus becomes weaker at the part where the tactile sense is presented. The strength of the presented tactile sense is increased based on the continuous presentation amplification factor, so that the user can continue to feel the same tactile sense without being accustomed or the like at the part where the tactile sense is presented.

Furthermore, as will be described later, the tactile sense presentation information may be included in a content stored in the server 10 using an SNS or the like. The tactile sense presentation information included in such a content may be stored in the tactile sense database DB. In this case, the tactile sense presentation information may include information regarding a creator of such a content. More specifically, the tactile sense presentation information may include a profile of an information provider providing the tactile sense presentation information. As a result, since the tactile sense presentation information is retrieved based on the profile of the information provider, the tactile sense intended by the creator of the content can be more appropriately presented to the user.

Furthermore, the tactile sense meta information type may be information for retrieval. The information for retrieval is information that can be used to retrieve the tactile sense presentation information. The information for retrieval may be generated based on an artificial intelligence (AI) technology. The information for retrieval may be generated based on, for example, various known machine learning algorithms. By using the information for retrieval as the tactile sense meta information, for example, even information that is not stored in the server 10 or the like can be used as the tactile sense meta information.

The tactile sense meta information type has been described with reference to FIG. 3. Note that the information regarding the signal waveform, the monotonicity, or the clarity may be parameters included in the tactile sense presentation information. In addition, the tactile sense meta information type is not limited to the example described with reference to FIG. 3. The tactile sense meta information type may be appropriately deleted from the list illustrated in FIG. 3 or added to the list. In addition, the tactile sense retrieval information includes information related to the content corresponding to the above-described tactile sense meta information type. Therefore, the tactile sense presentation information may be more concrete information of the tactile sense expected by the user.

### <<1.2. Configuration and function of information processing apparatus>>

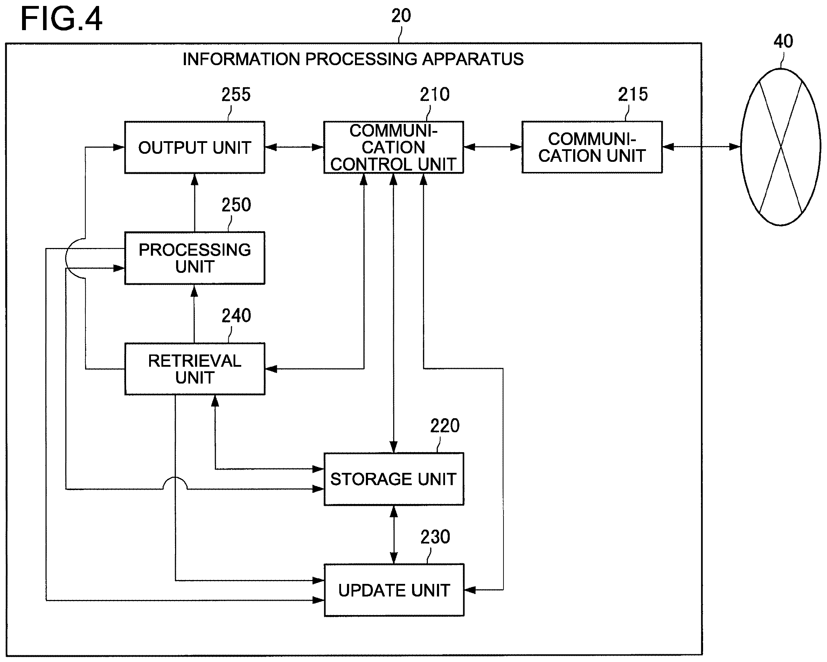

Next, the information processing apparatus 20 according to the embodiment of the present disclosure will be described with reference to FIG. 4. FIG. 4 is a functional block diagram illustrating a configuration of the information processing apparatus 20 according to the embodiment of the present disclosure. The information processing apparatus 20 according to the embodiment of the present disclosure has a function of retrieving the tactile sense presentation information from the tactile sense database, based on tactile sense retrieval information for retrieving the tactile sense presentation information in order to realize the tactile sense presented to the user. In addition, the information processing apparatus 20 has a function of outputting information related to the retrieved tactile sense presentation information. Furthermore, the information processing apparatus 20 has a function of updating a relationship between at least two or more of the plurality of pieces of tactile sense presentation information or the plurality of pieces of tactile sense meta information included in the tactile sense database. The functions of the information processing apparatus 20 are realized by cooperation of a communication control unit 210, a communication unit 215, a storage unit 220, an update unit 230, a retrieval unit 240, a processing unit 250, and an output unit 255 included in the information processing apparatus 20. Hereinafter, each functional unit included in the information processing apparatus 20 will be described.

The communication control unit 210 has a function of controlling communication performed between the information processing apparatus 20 and various devices connected to the network 40. More specifically, the communication control unit 210 controls the communication unit 215 to control the communication between the information processing apparatus 20 and various devices connected to the network 40. For example, the communication unit 215 receives information stored in the server 10 and transmits the information to the communication control unit 210. In addition, the communication unit 215 transmits the tactile sense retrieval information transmitted from the user terminal 30 to the communication control unit 210. Furthermore, the communication unit 215 transmits the tactile sense presentation information retrieved from the tactile sense database to the user terminal 30 via the network 40.

The storage unit 220 stores various types of information such as information transmitted to the information processing apparatus 20 or information generated in the information processing apparatus 20. For example, the storage unit 220 stores the tactile sense database. The tactile sense database is used for retrieval by the retrieval unit 240, if necessary. In addition, the tactile sense database is updated by the update unit 230, if necessary. Note that the storage unit 220 may store the tactile sense retrieval information transmitted from the user terminal 30 or the like to the information processing apparatus 20. Such tactile sense retrieval information is used, for example, by the retrieval unit 240 to retrieve the tactile sense presentation information.

The update unit 230 has a function of updating a relationship between at least two or more of the plurality of pieces of tactile sense presentation information or the plurality of pieces of tactile sense meta information included in the tactile sense database stored in the storage unit 220. The information processing apparatus 20 retrieves tactile sense presentation information based on the pieces of information. Therefore, by updating the relationship between the pieces of information, the information processing apparatus 20 can retrieve the tactile sense presentation information more accurately. As a result, information necessary for realizing the tactile sense is more appropriately provided to the user.

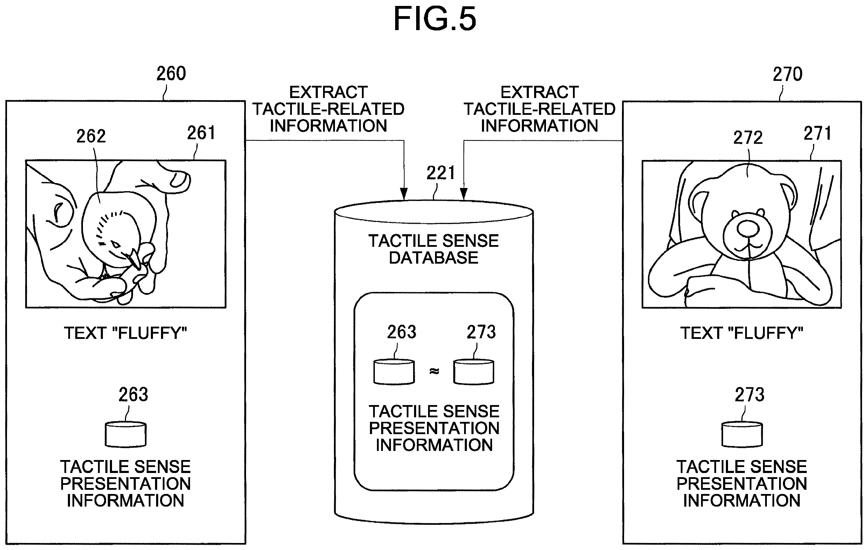

An example of an update of the tactile sense database by the update unit 230 will be described with reference to FIG. 5. It is assumed that a tactile sense database 221 illustrated in the center of FIG. 5 is stored in the storage unit 220. Various types of information, such as tactile sense presentation information, image information (for example, a photograph, a sticker, or the like), audio information, and text information, are transmitted from various external devices such as the server 10 to the information processing apparatus 20 via the network 40. These types of information are transmitted from the communication control unit 210 to the update unit 230. The update unit 230 extracts tactile-related information related to a tactile sense from the transmitted information, and stores the tactile-related information in the tactile sense database 221.

In the example illustrated in FIG. 5, in the tactile sense database 221, the tactile-related information is extracted from first information 260 and second information 270 and stored in the tactile sense database 221. The first information 260 is information in which first image information 261 including a chick image 262, first text information of "fluffy", and first tactile sense presentation information 263 are integrated. The first tactile sense presentation information 263 is tactile sense presentation information for realizing a tactile sense of the chick's body hair included in the first image information 261. On the other hand, the second information 270 is information in which second image information 271 including a teddy bear image 272, second text information of "fluffy", and second tactile sense presentation information 273 are integrated. The second tactile sense presentation information 273 is tactile sense presentation information for realizing the tactile sense of the teddy bear.

The update unit 230 extracts the first image information 261, the second image information 271, the first text information, the second text information, the first tactile sense presentation information 263, and the second tactile sense presentation information 273, these pieces of information being included in the first information 260 and the second information 270, and stores these pieces of information in the tactile sense database 221. At this time, the update unit 230 stores, in the tactile sense database 221, the first tactile sense presentation information 263 included in the first information 260 in association with the first image information 261 and the first text information. Furthermore, the update unit 230 stores, in the tactile sense database 221, the second tactile sense presentation information 273 included in the second information 270 in association with the second image information 271 and the second text information. The image information or the text information is associated with the tactile sense presentation information as the tactile sense meta information.

Here, an example in which the update unit 230 updates the tactile sense database based on the relationship between the plurality of pieces of tactile sense meta information stored in the tactile sense database 221 will be described. More specifically, the update unit 230 updates a tactile similarity between the first tactile sense presentation information associated with first tactile sense meta information and the second tactile sense presentation information associated with second tactile sense meta information, based on the similarity between the first tactile sense meta information and the second tactile sense meta information. For example, there is a positive correlation between the similarity and the tactile similarity in some cases. That is, when the similarity is high, the tactile similarity may also be high. In the present embodiment, when certain tactile sense presentation information is retrieved, tactile sense presentation information similar to the tactile sense presentation information may also be retrieved. Therefore, by updating the tactile similarity based on the similarity, information for realizing the tactile sense desired by the user can be more appropriately provided. In the example illustrated in FIG. 5, when the first tactile sense meta information and the second tactile sense meta information are similar to each other, the update unit 230 increases the tactile similarity between the first tactile sense presentation information 263 and the second tactile sense presentation information 273. In the example illustrated in FIG. 5, an example in which the first and second tactile sense meta information are text information will be described.

As described above, the tactile sense database 221 stores the first text information and the second text information of "fluffy". The update unit 230 determines that the first text information and the second text information are the same. Here, "matching" is included in the expression "similar". Therefore, the update unit 230 increases the tactile similarity between the first tactile sense presentation information 263 associated with the first text information and the second tactile sense presentation information 273 associated with the second text information.

Here, an effect obtained by updating the tactile sense database as described above will be described. The tactile sense presentation information is retrieved from the tactile sense database as described above. When certain tactile sense presentation information is retrieved, tactile sense presentation information similar to the retrieved tactile sense presentation information may also be retrieved. For example, tactile sense presentation information similar to certain retrieved tactile sense presentation information may also be retrieved. In the example described above, a similarity between the first tactile sense presentation information 263 and the second tactile sense presentation information 273 is increased. As a result, in a case where the retrieval unit 240 to be described later determines that the first tactile sense presentation information 263 and the second tactile sense presentation information 273 are similar to each other, the second tactile sense presentation information 273 is also retrieved when the first tactile sense presentation information 263 is retrieved. In some cases, the second tactile sense presentation information 273 may be tactile sense presentation information that can realize a tactile sense more desired by the user than the first tactile sense presentation information 263. Therefore, as described above, by correcting the similarity between the first tactile sense presentation information and the second tactile sense presentation information in accordance with the similarity between the first tactile sense meta information and the second tactile sense meta information, it is possible to more appropriately present a tactile sense more desired by the user.

Next, another specific example of the example in which the update unit 230 associates the tactile sense presentation information stored in the tactile sense database with the tactile sense meta information (here, character information) will be described. For example, the update unit 230 can associate the tactile sense presentation information with the tactile sense meta information by utilizing big data stored in the server 10. For example, it is assumed that the above-described big data includes information representing that an evaluation comment such as "rough" or "wet", is made for sand which is a product purchased by the user. In this case, for example, it is assumed that tactile sense meta information of "rough" is associated with certain tactile sense presentation information in the tactile sense database based on a history of transmission of the tactile sense presentation information to the user terminal 30. At this time, the update unit 230 may update the tactile sense database by associating character information of "sand" with the tactile sense presentation information as the tactile sense meta information.

Further, the update unit 230 may update the tactile similarity between the plurality of pieces of tactile sense presentation information according to the number of times of use (that is, transmission to the user terminal 30 or the like) of the tactile sense presentation information. Specifically, when a plurality of pieces of tactile sense presentation information is used at similar ratios based on certain tactile sense retrieval information, the update unit 230 increases the tactile similarity between these pieces of tactile sense presentation information. For example, when certain tactile sense presentation information and tactile sense presentation information different from the tactile sense presentation information are transmitted to the user terminal 30 about the same number of times based on tactile sense retrieval information of "rough", the update unit 230 may increase the tactile similarity between the two pieces of tactile sense presentation information. In this manner, the update unit 230 can update the tactile sense database based on the number of times of actual use of the tactile sense presentation information or the like. Therefore, the tactile sense database is a database that matches the use situation of the tactile sense presentation information by the user. As a result, information for realizing the tactile sense is more appropriately provided to the user. Here, the update unit 230 increases the tactile similarity between the pieces of tactile sense presentation information associated with two pieces of text information based on the similarity between the two pieces of text information. Without being limited to the text information, the update unit 230 may update the tactile similarity between pieces of tactile sense presentation information associated with two pieces of image information based on the similarity between the two pieces of image information.

Furthermore, the update unit 230 may update the tactile sense database based on a retrieval result by the retrieval unit 240 to be described later. Accordingly, the tactile sense database is updated to a more appropriate tactile sense database according to the past retrieval result. As a result, accuracy in the retrieval of the tactile sense presentation information is enhanced, and information for realizing the tactile sense is more appropriately provided to the user. For example, when a plurality of pieces of tactile sense presentation information are retrieved by the retrieval unit 240, the update unit 230 may update the tactile sense database by increasing a tactile similarity between the plurality of pieces of tactile sense presentation information. When the plurality of pieces of tactile sense presentation information is retrieved based on certain tactile sense retrieval information, there is a possibility that these pieces of tactile sense presentation information can realize similar tactile senses. Therefore, by increasing the tactile similarity between these pieces of tactile sense presentation information, the tactile sense presentation information for realizing a similar tactile sense can be easily retrieved. As a result, since the user can select desired tactile sense presentation information from similar pieces of tactile sense presentation information, information for realizing the tactile sense can be more appropriately provided to the user.

Furthermore, the update unit 230 may update the tactile sense database based on the frequency (adoption frequency) at which the tactile sense presentation information has been adopted and the tactile sense retrieval information used for retrieving the adopted tactile sense presentation information. Here, the adoption of the tactile sense presentation information may mean that the retrieved tactile sense presentation information is used for realizing the tactile sense actually presented to the user. For example, the update unit 230 may update a probability that the tactile sense presentation information is retrieved based on the adoption frequency at which the tactile sense presentation information has been adopted and the tactile sense retrieval information used for retrieving the adopted tactile sense presentation information. Here, a case in which a plurality of pieces of tactile sense presentation information is retrieved based on a specific tactile sense retrieval information will be described as an example. In this case, the update unit 230 may update the tactile sense database such that, among the plurality of pieces of tactile sense presentation information, tactile sense presentation information having a higher adoption frequency is retrieved with a higher probability based on the specific tactile sense retrieval information. Furthermore, the update unit 230 may update the tactile sense database such that tactile sense presentation information with a lower adoption frequency is retrieved with a lower probability based on specific tactile sense retrieval information. In the present embodiment, for example, when the user determines that the tactile sense presentation information is inappropriate, even the retrieved tactile sense presentation information may not be used for realizing the tactile sense. Accordingly, it is considered that the tactile sense desired by the user can be more appropriately realized by the tactile sense presentation information having a higher adoption frequency. Therefore, the update unit 230 updates the tactile sense database based on the adoption frequency of the tactile sense presentation information and the tactile sense retrieval information used for retrieving the adopted tactile sense presentation information, whereby information for realizing the tactile sense can be more appropriately provided to the user. In addition, the update unit 230 may update the tactile sense database regarding detection of tactile sense presentation information similar to the tactile sense presentation information targeted for the adoption frequency, based on the adoption frequency of the tactile sense presentation information and the tactile sense retrieval information used for retrieving the adopted tactile sense presentation information. For example, the update unit 230 may update the tactile sense database so that among the plurality of pieces of retrieved tactile sense presentation information, the tactile sense presentation information similar to tactile sense presentation information having a higher adoption frequency is also retrieved with a higher probability based on the tactile sense retrieval information used for retrieving the tactile sense presentation information having a high adoption frequency.

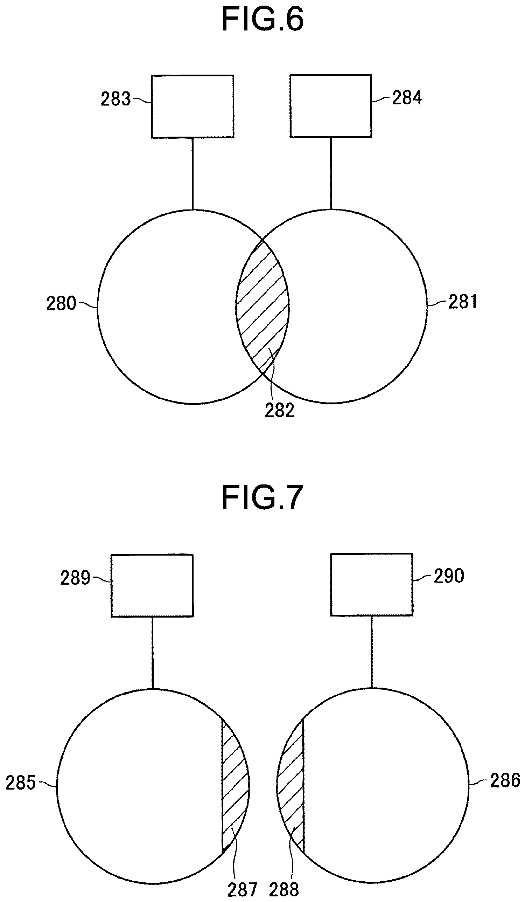

Next, another example in which the update unit 230 updates the tactile sense database will be described with reference to FIGS. 6 and 7. FIGS. 6 and 7 are diagrams for describing an example in which the update unit 230 updates a tactile sense database based on a relationship between two tactile sense meta information groups. Here, the tactile sense meta information group is a set of the plurality of pieces of tactile sense meta information.

First, an example in which the update unit 230 updates the tactile sense database will be described with reference to FIG. 6. FIG. 6 illustrates a first tactile sense meta information group 280 that is a first set of the plurality of pieces of tactile sense meta information stored in the tactile sense database, and a second tactile sense meta information group 281 that is a second set of the plurality of pieces of tactile sense meta information stored in the tactile sense database. Third tactile sense presentation information 283 and fourth tactile sense presentation information 284 are associated with the first tactile sense meta information group 280 and the second tactile sense meta information group 281, respectively. In this case, the first tactile sense meta information group 280 and the second tactile sense meta information group 281 have a shared tactile sense meta information group 282. In this case, the update unit 230 may update the tactile sense database by associating the third tactile sense presentation information 283, which is associated with the first tactile sense meta information group 280 but is not associated with the second tactile sense meta information group 281, with the second tactile sense meta information group 281. The third tactile sense presentation information 283 associated with the first tactile sense meta information group 280 may be, for example, tactile sense presentation information for realizing a tactile sense as evoked by the second tactile sense meta information group 281. Therefore, by updating the tactile sense database in this way, more appropriate tactile sense presentation information is retrieved by the user.

As described above, the first tactile sense meta information group 280 and the second tactile sense meta information group 281 do not necessarily have the shared tactile sense meta information group 282. As illustrated in FIG. 7, even when a third tactile sense meta information group 285 and a fourth tactile sense meta information group 286 do not have a shared tactile sense meta information group, the two tactile sense meta information groups may have a first similar tactile sense meta information group 287 or a second similar tactile sense meta information group 288 which are similar to each other. In this case, the update unit 230 may update the tactile sense database by associating tactile sense presentation information 289 associated with the third tactile sense meta information group 285 with the fourth tactile sense meta information group 286. Note that the tactile sense presentation information 289 associated with the third tactile sense meta information group 285 and tactile sense presentation information 290 associated with the fourth tactile sense meta information group 286 are different pieces of tactile sense presentation information.

Next, referring back to FIG. 4, the retrieval unit 240 included in the information processing apparatus 20 will be described. The retrieval unit 240 has a function of retrieving the tactile sense presentation information from the tactile sense database using the tactile sense retrieval information for retrieving the tactile sense presentation information. Here, the retrieval unit 240 uses, for example, tactile sense retrieval information transmitted from the user terminal 30 or the like to the information processing apparatus 20 via the network 40.

Note that although the retrieval unit 240 may retrieve a plurality of pieces of tactile sense presentation information from the tactile sense database, when the number of pieces of tactile sense presentation information to be retrieved is large, the total amount of data of the tactile sense presentation information to be retrieved may be excessively large. Therefore, an upper limit of the number of pieces of tactile sense presentation information to be retrieved by the retrieval unit 240 may be set. The upper limit may be, for example, about 10.

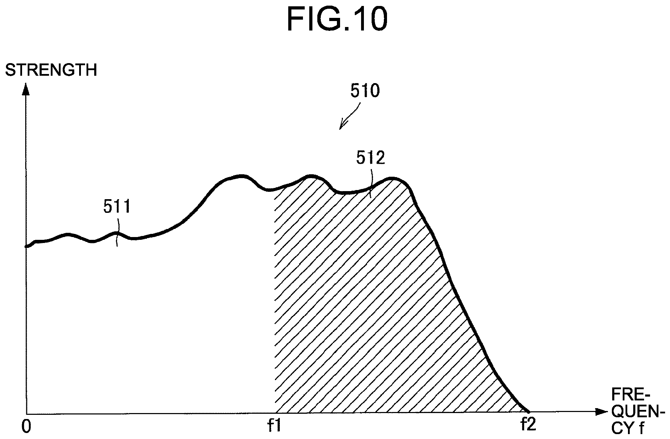

Here, the tactile sense retrieval information is information that can be compared with the tactile sense meta information. The retrieval unit 240 retrieves the tactile sense presentation information based on a relationship between the tactile sense retrieval information and the tactile sense meta information stored in the tactile sense database. For example, the retrieval unit 240 determines a similarity between the tactile sense retrieval information and the tactile sense meta information. When the tactile sense meta information which matches or is similar to the tactile sense retrieval information is found, the retrieval unit 240 finds the tactile sense presentation information associated with the retrieved tactile sense meta information. The retrieved tactile sense presentation information is transmitted to the processing unit 250 or the output unit 255. In addition, the retrieval result by the retrieval unit 240 is transmitted to the update unit 230. An example in which the retrieval unit 240 retrieves the tactile sense presentation information from the tactile sense database will be described later with reference to FIG. 10.

The retrieval unit 240 transmits the retrieved tactile sense presentation information to the processing unit 250 or the output unit 255. The retrieval unit 240 may transmit an ID corresponding to the retrieved tactile sense presentation information to the output unit 255. The ID is transmitted to the user terminal 30 via the network 40. The user terminal 30 may acquire the tactile sense presentation information by making an inquiry to, for example, a mirror server of the information processing apparatus 20 existing in the vicinity of the user terminal 30, based on the transmitted ID. Furthermore, the user terminal 30 may acquire the tactile sense presentation information by making an inquiry to another user terminal or the like. In this case, for communication between the user terminal 30 and another terminal, Peer-to-Peer communication, Bluetooth (registered trademark) connection, or the like may be used without using the network 40.

Furthermore, the user terminal 30 may store a similar tactile sense database similar to the tactile sense database stored in the information processing apparatus 20. In this case, the storage unit 220 may store a tactile sense database and the similar tactile sense database. The retrieval unit 240 retrieves, from the similar tactile sense database, tactile sense presentation information similar to the tactile sense presentation information retrieved from the tactile sense database. The retrieval unit 240 transmits, to the output unit 255, an ID of the similar tactile sense presentation information retrieved from the similar tactile sense database and a difference between the similar tactile sense presentation information and the tactile sense presentation information retrieved from the tactile sense database. The ID and the difference are transmitted to the user terminal 30. The user terminal 30 reads the similar tactile sense presentation information based on the transmitted ID. Furthermore, the user terminal 30 adds the read similar tactile sense presentation information and the difference to generate target tactile sense presentation information. In this case, since the information processing apparatus 20 only needs to transmit the ID and the difference to the user terminal 30, the amount of data to be transmitted to the user terminal 30 can be reduced.

The processing unit 250 has a function of performing various types of processing based on the results of retrieval by the retrieval unit 240. More specifically, the processing unit 250 has a function of generating information based on the tactile sense retrieval information retrieved by the retrieval unit 240 and a function of generating information representing information regarding a result of the retrieval. The processing unit 250 transmits the result of processing to the output unit 255. In addition, the processing unit 250 transmits the result of processing to the update unit 230, if necessary.

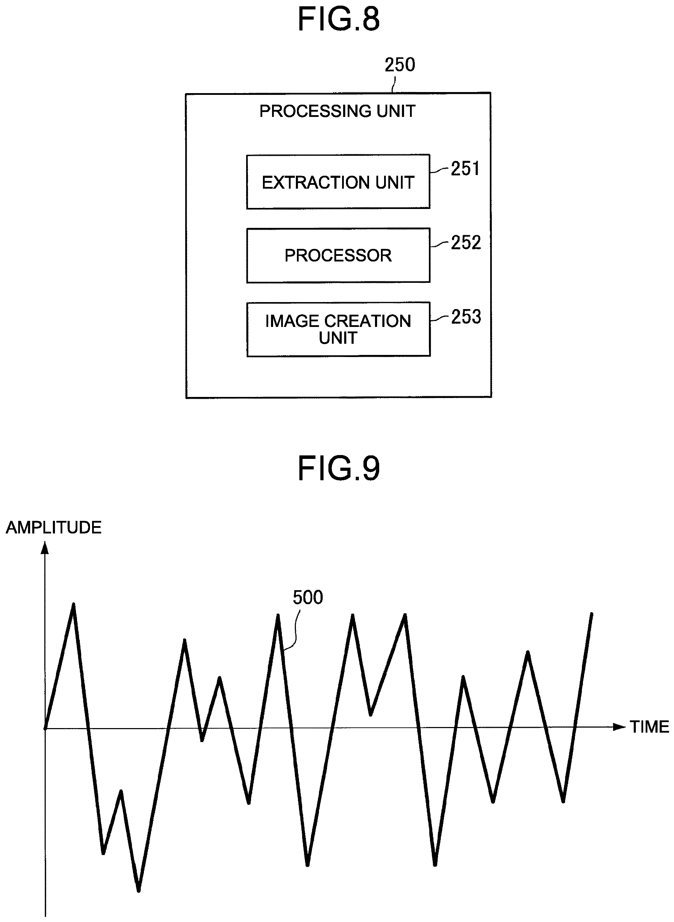

The processing unit 250 will be described in more detail with reference to FIG. 8. FIG. 8 is a functional block diagram illustrating a configuration of the processing unit 250. As illustrated in FIG. 8, the processing unit 250 includes an extraction unit 251, the processor 252, and an image creation unit 253.

The extraction unit 251 has a function of extracting feature information representing a feature of the tactile sense presentation information retrieved by the retrieval unit 240. The extracted feature information is transmitted to the processor 252. A data amount of the extracted feature information may be smaller than a data amount of the tactile sense presentation information to be extracted. The extracted feature information is transmitted to the communication control unit 210 and transmitted to the user terminal 30. A tactile sense is presented to the user by the user terminal 30 based on the transmitted feature information. As such, by extracting the feature information, the amount of data required for presenting the tactile sense can be reduced.

Note that the extracted feature information may be extracted based on tactile sense retrieval information corresponding to the retrieved tactile sense presentation information. The tactile sense retrieval information includes information regarding a tactile sense expected by the user. Therefore, the feature information extracted based on the tactile sense retrieval information may be information that matches the tactile sense desired by the user. Therefore, by extracting the feature information based on the tactile sense retrieval information, it is possible to more appropriately provide information for realizing the tactile sense desired by the user.

Furthermore, when the tactile sense presented based on the retrieved tactile sense presentation information is a waveform having periodicity, the extraction unit 251 may extract information representing one cycle of the waveform as the feature information. For example, the extraction unit 251 may calculate an autocorrelation function of the tactile sense presentation information and extract information for one cycle. In addition, the extraction unit 251 may extract information representing one cycle based on the tactile sense meta information associated with the retrieved tactile sense presentation information. The extraction unit 251 transmits, to the communication control unit 210, the extracted information for one cycle and information representing how many pieces of information for one cycle are included in the tactile sense presentation information. These pieces of transmitted information are transmitted to the user terminal 30 and used for realizing the tactile sense. As such, by extracting information for one cycle from the tactile sense presentation information, the amount of data transmitted from the information processing apparatus 20 to the user terminal 30 can be reduced.

Furthermore, the extracted feature information may be extracted based on feeling information regarding the user's feeling included in the tactile sense retrieval information. The feeling information may be, for example, information regarding a feeling such as "happiness" or "anger". For example, when the tactile sense retrieval information is image information, the feeling information may be acquired from the image information. For example, in a case where the tactile sense retrieval information is image information including an image of a smiling face of a person, the feeling information of "happiness" may be acquired from the image of the smiling face using various known image recognition technologies.

Here, an example in which feature information is extracted from tactile sense presentation information based on the feeling information acquired from tactile sense retrieval information will be described with reference to FIGS. 9 and 10. FIG. 9 is a diagram illustrating a signal waveform of vibration as an example of the retrieved tactile sense presentation information. In addition, FIG. 10 is a diagram illustrating a frequency spectrum of the signal waveform illustrated in FIG. 9.

FIG. 9 illustrates a signal waveform 500 of vibration represented by the tactile sense retrieval information, with time on a horizontal axis and amplitude on a vertical axis. FIG. 10 illustrates a frequency spectrum 510 of the signal waveform 500 illustrated in FIG. 9, with a frequency f on a horizontal axis and strength on a vertical axis. As illustrated in FIG. 10, the signal waveform 500 has components of frequencies of 0 to f2.

Generally, the feeling of "happiness" is expressed by a vibration stimulus with a higher frequency than that of other feelings. Therefore, when a tactile sense by the vibration stimulus with a higher frequency is presented to the user, the user may recall a feeling of "happiness" by the stimulus. Therefore, when information regarding the feeling of "happiness" is included in the tactile sense retrieval information, the extraction unit 251 may extract information regarding a signal waveform with a higher frequency from the signal waveforms and transmit the extracted information to the communication control unit 210. For example, the extraction unit 251 may extract a frequency component 512 having frequencies of f1 or higher indicated with hatched lines illustrated in FIG. 10 and transmit the frequency component 512 to the communication control unit 210. In addition, the extraction unit 251 may perform processing, such as frequency thinning or low resolution, on a frequency component 511 having frequencies lower than f1, and transmit the processed frequency component to the communication control unit 210.

Furthermore, the feeling of "anger" is expressed by a vibration stimulus of a lower frequency than that of other feelings. Therefore, when a tactile sense by the vibration stimulus of a lower frequency is presented to the user, the user may recall a feeling of "anger" by the stimulus. For example, the extraction unit 251 may extract the frequency component 511 having a frequency lower than f1 illustrated in FIG. 10 and transmit the frequency component 511 to the communication control unit 210. On the other hand, the extraction unit 251 may perform processing, such as frequency thinning or low resolution, on the frequency component 512 having the frequency of f1 or higher, and transmit the processed frequency component to the communication control unit 210. As described above, the feature information is extracted from the tactile sense presentation information based on the user's feeling information, whereby the tactile sense matching the feeling can be more appropriately presented to the user.

Here, processing when the extraction unit 251 transmits the feature information to the output unit 255 will be supplemented. The feature information extracted from the tactile sense presentation information may be the same as the tactile sense meta information associated with the tactile sense presentation information. In this case, the extraction unit 251 may not transmit the feature information to the output unit 255. In addition, when all the pieces of extracted feature information are covered by the tactile sense meta information associated with the tactile sense presentation information to be extracted, the extraction unit 251 may not transmit all the pieces of feature information to the output unit 255. In this case, the extraction unit 251 transmits the tactile sense meta information associated with the tactile sense presentation information to the output unit 255. The transmitted tactile sense meta information is output to the user terminal 30 or the like via the communication control unit 210.

The processor 252 has a function of processing the tactile sense presentation information retrieved by the retrieval unit 240. For example, when the tactile sense presentation information is represented not by the signal waveform itself but by a parameter or the like, the processor 252 generates information representing the signal waveform based on the parameter or the like. In addition, when it is necessary to process the tactile sense presentation information into information corresponding to the device presenting a tactile sense to the user, the processor 252 processes the tactile sense presentation information into information corresponding to the device. The processor 252 may process the tactile sense presentation information into information corresponding to the device based on the device dependent information stored in the tactile sense database. In addition, the processor 252 may summarize the tactile sense presentation information. More specifically, the processor 252 may summarize the tactile sense presentation information by performing processing of reducing the resolution of the signal waveform represented by the tactile sense presentation information, or the like. The summarized tactile sense presentation information may be used, for example, to confirm whether or not the tactile sense based on the retrieved tactile sense presentation information is a tactile sense desired by the user. Furthermore, the processor 252 may process the tactile sense presentation information according to a part of the user where the tactile sense is presented.

The image creation unit 253 creates image data for displaying an image on the user terminal 30 or the like. For example, the image creation unit 253 creates image data for causing the user terminal 30 to display the result retrieved by the retrieval unit 240. Specifically, the image creation unit 253 may create image data for causing the user terminal 30 to display the number, contents, or the like of the retrieved tactile sense presentation information. In addition, when the tactile sense presentation information has not been retrieved, the image creation unit 253 may create image data for displaying the fact that the tactile sense presentation information has not been retrieved.

The output unit 255 has a function of outputting various types of information. For example, the information generated by the processing unit 250 or the tactile sense presentation information transmitted from the retrieval unit 240 is output to the communication control unit 210 as information related to the tactile sense presentation information. The information related to the tactile sense presentation information transmitted to the communication control unit 210 is transmitted to the user terminal 30 via the network 40. As a result, information related to the tactile sense presentation information is provided to the user.

### <<1.3. Configuration and function of user terminal>>

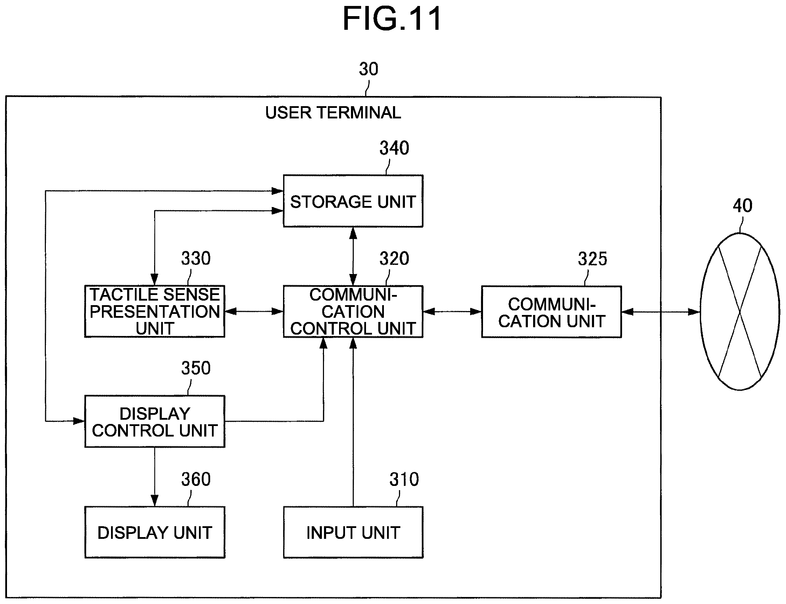

Next, the user terminal 30 will be described with reference to FIG. 11. FIG. 11 is a functional block diagram illustrating a configuration of the user terminal 30. The user terminal 30 has a function of acquiring tactile sense retrieval information and transmitting the acquired tactile sense retrieval information to the information processing apparatus 20. In addition, the user terminal 30 has a function of presenting the tactile sense to the user based on the tactile sense presentation information retrieved by the information processing apparatus 20. Furthermore, the user terminal 30 has a function of displaying a result of retrieval of the tactile sense presentation information from the tactile sense database by the information processing apparatus 20. The functions of the user terminal 30 are realized by an input unit 310, a communication control unit 320, a communication unit 325, a tactile sense presentation unit 330, a storage unit 340, a display control unit 350, and a display unit 355 included in the user terminal 30.

The input unit 310 has a function of acquiring various types of information according to an operation by the user. The input unit 310 is realized by, for example, various known input devices such as a mouse and a keyboard. The input unit 310 acquires tactile sense retrieval information, for example, by the user's operation. The tactile sense retrieval information may be, for example, information such as text information, image information, or audio information. The input unit 310 transmits the acquired information to the communication control unit 320.

As described above, the information processing apparatus 20 may retrieve a plurality of pieces of tactile sense presentation information, and information related to these pieces of tactile sense presentation information may be transmitted to the user terminal 30. In this case, the display unit 355 to be described later can display, for example, information representing the contents of the plurality of pieces of tactile sense presentation information that have been retrieved. The user can refer to the contents of the plurality of pieces of tactile sense presentation information displayed on the display unit 355, select tactile sense presentation information for realizing a desired tactile sense, and input information representing the selected tactile sense presentation information to the input unit 310. The input unit 310 can transmit the information representing the tactile sense presentation information input by the user to the information processing apparatus 20 via the communication control unit 320, the communication unit 325, and the network 40. As a result, the information processing apparatus 20 can recognize a result of selection the tactile sense presentation information by the user.

The communication control unit 320 has a function of controlling transmission and reception of information between the user terminal 30 and another device by the communication unit 325. For example, the communication control unit 320 transmits various types of information transmitted from the input unit 310 to the communication unit 325 to transmit such information to the information processing apparatus 20 or the like via the network 40.

The communication unit 325 has a function of transmitting and receiving various types of information. For example, the communication unit 325 has a function of transmitting various types of information acquired by the input unit 310 to the information processing apparatus 20 or the like via the network 40. In addition, the communication unit 325 receives tactile sense presentation information retrieved by the information processing apparatus 20 via the network 40. In addition, the communication unit 325 may receive a result of retrieval of the tactile sense presentation information by the information processing apparatus 20. The information received by the communication unit 325 via the network 40 is transmitted to the communication control unit 320.

The tactile sense presentation unit 330 has a function of presenting a tactile sense to the user based on the information related to the tactile sense presentation information output from the information processing apparatus 20. For example, the tactile sense presentation unit 330 may have a shape of, for example, a jacket or the like that can be worn by the user. In this case, the tactile sense presentation unit 330 may be provided with a device that generates vibration at a position such as a shoulder or a chest of the user, for example. The tactile sense presentation unit 330 presents a tactile sense to the user by causing the device included in the tactile sense presentation unit 330 to vibrate based on the information related to the tactile sense presentation information. When the information related to the tactile sense presentation information is information representing a vibration waveform of the tactile sense, the tactile sense presentation unit 330 presents the tactile sense to the user using the information. In addition, the tactile sense presentation unit 330 may convert the information related to the tactile sense presentation information into signal waveform information corresponding to the device included in the tactile sense presentation unit 330, if necessary. The tactile sense presentation unit 330 presents the tactile sense to the user based on the converted signal waveform information. As a result, it is possible to more appropriately present the tactile sense to the user according to the shape, mechanism, or the like of the device. The tactile sense presentation unit 330 may acquire information for conversion into signal waveform information corresponding to the device from the storage unit 340. In addition, when the information related to the tactile sense presentation information is a parameter or the like characterizing the signal waveform information, the tactile sense presentation unit 330 may generate the signal waveform information based on the parameter or the like and present the tactile sense.

Furthermore, when the tactile sense presentation unit 330 includes a plurality of devices for presenting a tactile sense, the tactile sense presentation unit 330 may control presentation of the tactile sense by the plurality of devices in time series. As a result, it is possible to present the tactile sense to the user through complex perception. For example, the tactile sense presentation unit 330 may control presentation of the tactile sense by the plurality of devices based on the information regarding the plurality of pieces of tactile sense presentation information. For example, when the plurality of devices are arranged at positions along the right shoulder to the left flank of the user, the tactile sense presentation unit 330 can control the plurality of devices to present a tactile sense of obliquely tearing from the right shoulder to the left flank to the user.

The storage unit 340 stores various types of information such as information acquired by the user terminal 30 or information necessary for processing by the user terminal 30. For example, the storage unit 340 stores information, a retrieval result, or the like related to the retrieved tactile sense presentation information transmitted from the information processing apparatus 20. In addition, the storage unit 340 stores information necessary for the tactile sense presentation unit 330 to present a tactile sense. For example, the storage unit 340 stores information for the tactile sense presentation unit 330 to convert the tactile sense presentation information into information corresponding to the device. In addition, the storage unit 340 may store a database similar to the tactile sense database stored in the information processing apparatus 20. The information stored in the storage unit 340 is referred to by the communication control unit 320, the tactile sense presentation unit 330, or the display control unit 350, if necessary.

The display control unit 350 has a function of controlling display of various types of information by the display unit 355 based on the image data created by the information processing apparatus 20. For example, the display control unit 350 acquires, from the communication control unit 320, image data related to a retrieval result of the tactile sense presentation information by the information processing apparatus 20, transmits the image data to the display unit 355, and causes the display unit 355 to display the retrieval result. In addition, the display control unit 350 may process the acquired image data and transmit the processed image data to the display unit 355, if necessary. For example, the display control unit 350 may acquire the image data representing that the plurality of pieces of tactile sense presentation information has been retrieved. In this case, the display control unit 350 may process the image data so that the information representing the plurality of pieces of tactile sense presentation information is displayed in order from the top of a screen of the display unit 355 in descending order of the number of times of use by the user. As a result, the user can recognize the tactile sense presentation information that is used a high number of times with reference to the display unit 355. It is estimated that pieces of the tactile sense presentation information that are used a high number of times of use can more appropriately realize the tactile sense desired by the user. Therefore, the content of the tactile sense presentation information is displayed on the display unit 355 in descending order of the number of times of use, whereby an appropriate tactile sense is presented to the user.

The display unit 355 has a function of displaying various types of information to the user as an image. The display unit 355 is realized by various known image display devices such as a liquid crystal display. For example, the display unit 355 may display an image representing the content of the retrieved tactile sense presentation information. More specifically, the display unit 355 may display an image evoking a tactile sense presented based on the retrieved tactile sense presentation information. The user can recall the presented tactile sense by referring to such an image. In addition, when the plurality of pieces of tactile sense presentation information is retrieved by the information processing apparatus 20, the display unit 355 may display an image that evokes each of the tactile senses corresponding to the plurality of pieces of tactile sense presentation information. The user can select an image that evokes the tactile sense most desired by the user from the plurality of images displayed on the display unit 355, and input information regarding the tactile sense corresponding to the selected image to the input unit 310. In this case, the tactile sense presentation unit 330 can present the selected tactile sense to the user.

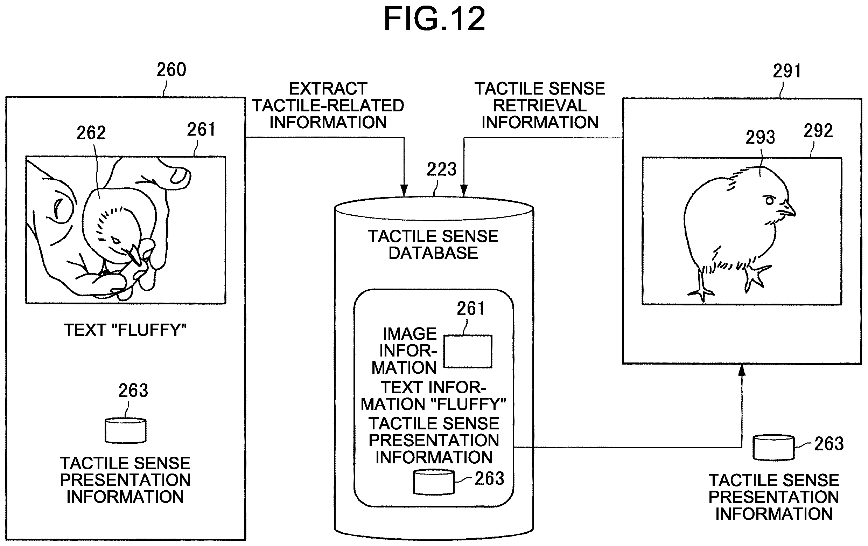

Next, a state in which tactile sense presentation information is retrieved will be described with reference to FIG. 12. FIG. 12 is a diagram illustrating the state in which tactile sense presentation information is retrieved.

A tactile sense database 223 stored in the storage unit 220 of the information processing apparatus 20 is illustrated in the center of FIG. 12. It is assumed that the tactile sense database 223 stores tactile-related information acquired from the first information 260 described with reference to FIG. 5. More specifically, it is assumed that the pieces of the first image information 261 including the chick image 262 illustrated in FIG. 5, the first text information of "fluffy", and the first tactile sense presentation information 263 are stored in the tactile sense database 223.

Here, the user inputs third information 291 to the input unit 310 of the user terminal 30. The third information 291 includes third image information 292 having a chick image 293. The third image information 292 is transmitted from the user terminal 30 to the information processing apparatus 20, as tactile sense retrieval information. In accordance with this transmission, a signal for requesting the retrieval of the tactile sense presentation information is transmitted from the user terminal 30 to the information processing apparatus 20. The information processing apparatus 20 searches the tactile sense database 223 using the third image information 292. Here, the chick image 262 included in the first image information 261 is similar to the chick image 293 included in the third image information 292. The information processing apparatus 20 determines that the first image information 261 stored in the tactile sense database 223 is similar to the third image information 292 transmitted from the user terminal 30. The information processing apparatus 20 retrieves the first tactile sense presentation information 263 associated with the first image information 261, and transmits the first tactile sense presentation information 263 to the user terminal 30. The tactile sense presentation unit 330 can present a tactile sense based on the transmitted first tactile sense presentation information 263. In addition, the first tactile sense presentation information 263 received by the user terminal 30 is stored together with the third image information 292 in the storage unit 340 of the user terminal 30. As a result, the user terminal 30 can transmit the third image information 292 together with the first tactile sense presentation information 263 to, for example, various servers connected to the network.

Generally, there is a time lag between when the user terminal 30 requests the information processing apparatus 20 to retrieve the tactile sense presentation information and when the user terminal 30 presents a tactile sense. For example, when the user is browsing a moving image displayed on the display unit 355, the user may want the tactile sense presentation unit 330 to present the tactile sense in real time to the moving image. In this case, for example, an analysis unit (not illustrated) included in the user terminal 30 analyzes the moving image displayed on the display unit 355, and requests the information processing apparatus 20 to retrieve the tactile sense presentation information based on the analysis result. For example, when the display unit 355 displays a moving image showing a state in which a horse is running like "clip-clop", the analysis unit analyzes that an image showing that the horse is running is included in the moving image. Furthermore, the user terminal 30 transmits, to the information processing apparatus 20, information representing a state when the horse is running like "clip-clop" as tactile sense retrieval information based on such an analysis result, and requests retrieval of the tactile sense presentation information. However, due to occurrence of the time lag, it may be difficult to present the tactile sense to the tactile sense presentation unit 330 in real time if retrieval of the tactile sense presentation information by the information processing apparatus 20 is waited for. Therefore, a provisional tactile sense is presented to the user during such a time lag based on the tactile sense presentation information stored in the user terminal 30, so that it is possible to prevent the user from feeling the time lag.

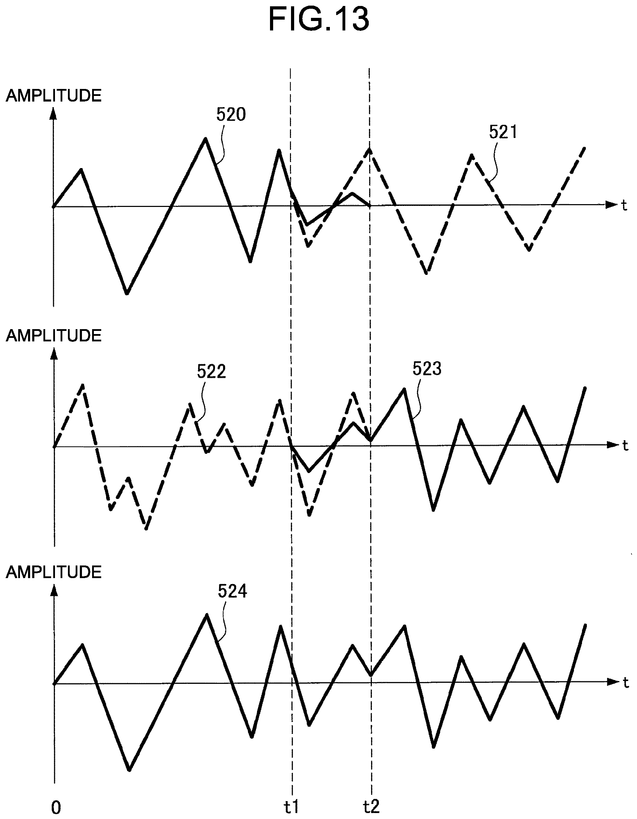

An example in which the user terminal 30 presents the provisional tactile sense so as to prevent the user from feeling the time lag will be described with reference to FIG. 13. FIG. 13 is a diagram illustrating signal waveforms of vibration related to a tactile sense presented to a user. FIG. 13 illustrates, in order from the top, a first vibration waveform 520 related to the provisional tactile sense presented based on the tactile sense presentation information stored in the user terminal 30, a second vibration waveform 523 related to the tactile sense presented based on the tactile sense presentation information retrieved by the information processing apparatus 20, and a vibration waveform 524 which is a superposition of the first vibration waveform 520 and the second vibration waveform 523. Note that a horizontal axis represents time, and the time when the user inputs the tactile sense retrieval information to the user terminal 30 is set to 0. In addition, a vertical axis represents amplitude of each vibration waveform.

The user terminal 30 presents a tactile sense to the user based on the tactile sense presentation information stored in the storage unit 340. More specifically, the tactile sense presentation unit 330 presents the tactile sense represented by the first vibration waveform 520 to the user. Before time t1, the first vibration waveform 520 is different from a vibration waveform 522 indicated by a broken line in the middle, corresponding to the desired tactile sense. Generally, a person cannot accurately feel a tactile sense at the timing when the person starts to feel the tactile sense. Therefore, even if the first vibration waveform 520 is different from the desired vibration waveform 522, the user can feel the tactile sense without feeling wrongness. In addition, the amplitude of the first vibration waveform 520 is smaller than that of a vibration waveform 521 represented by the tactile sense presentation information stored in the user terminal 30 from time t1 to time t2. That is, the first vibration waveform 520 fades out from time t1 to time t2. On the other hand, the second vibration waveform 523 fades in from time t1 to time t2. After time t2, the second vibration waveform 523 becomes a waveform of the tactile sense desired by the user.

The vibration waveform 524 which is the superposition of the first vibration waveform 520 and the second vibration waveform 523 described above is illustrated at the bottom of FIG. 13. As such, the tactile sense is presented to the user based on the tactile sense presentation information stored in the user terminal 30 until the tactile sense is presented based on the tactile sense presentation information from the information processing apparatus 20. As a result, it is possible to present a tactile sense that does not cause feeling of wrongness to the user. When the moving image browsed by the user is stored in advance in the user terminal 30 or the like, for example, the timing at which the moving image is displayed can be delayed. As a result, it is possible to match the timing at which the tactile sense is presented with the timing at which the moving image is displayed, and present the tactile sense that does not cause feeling of wrongness to the user.

### <2. Update example>

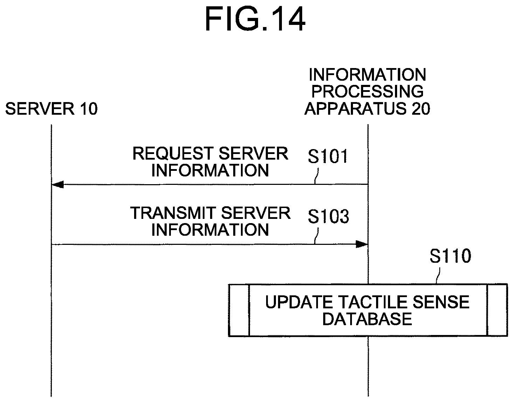

Next, an example in which the information processing apparatus 20 updates the tactile sense database stored in the storage unit 220 will be described with reference to FIG. 14. FIG. 14 is a flowchart illustrating a flow of updating the tactile sense database by the information processing apparatus 20 according to the embodiment of the present disclosure. Hereinafter, a description will be given along the flowchart illustrated in FIG. 14.

First, the information processing apparatus 20 requests server information from the server 10 (step S101). More specifically, the communication unit 215 transmits a signal for requesting tactile-related information to the server 10 via the network 40.

Next, the server 10 transmits the server information to the information processing apparatus 20 (step S103). For example, the server 10 transmits, as the server information, image information, text information, audio information, or tactile sense presentation information based on an SNS or the like to the information processing apparatus 20.

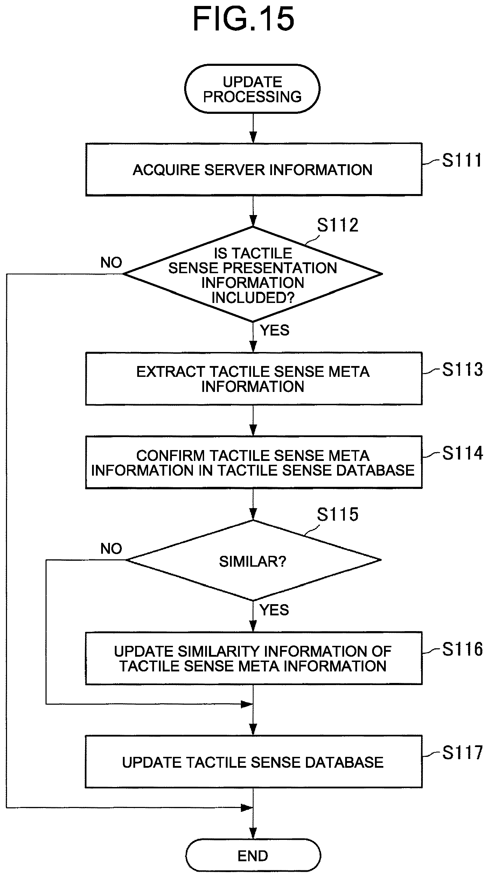

Next, the information processing apparatus 20 performs update processing of the tactile sense database (step S110). More specifically, the update unit 230 updates the tactile sense database stored in the storage unit 220 based on the server information. More detailed update processing will be described with reference to FIG. 15. FIG. 15 is a flowchart illustrating update processing of the tactile sense database. Hereinafter, a description will be given along the flowchart illustrated in FIG. 15.

First, the update unit 230 acquires the server information (step Sill). Next, the update unit 230 determines whether or not the tactile sense presentation information is included in the server information (step S112). When it is determined that the tactile sense presentation information is included in the server information (step S112: Yes), the processing proceeds to step S113. When it is determined that the tactile sense presentation information is not included in the server information (step S112: No), the update processing ends.

When it is determined as Yes in step S112, the update unit 230 extracts the tactile sense meta information from the server information (step S113). Here, the tactile sense meta information is extracted from the image information, the text information, the audio information, the tactile sense presentation information, or the like included in the server information. For example, among the information included in the server information, information related to the tactile sense is extracted as the tactile sense meta information. For example, when the server information includes text information of "fluffy", the text information is extracted as the tactile sense meta information.

Next, the update unit 230 confirms the tactile sense meta information included in the tactile sense database (step S114). More specifically, the update unit 230 compares each piece of the tactile sense meta information extracted in step S113 with each piece of the tactile sense meta information included in the tactile sense database. When the tactile sense meta information that completely matches the extracted tactile sense meta information exists as the tactile sense meta information associated with the tactile sense presentation information detected in step S112 in the tactile sense database (step S115: Yes), the update processing illustrated in FIG. 15 ends. That is, when the extracted tactile sense meta information exists as registered data in the tactile sense database, the update processing illustrated in FIG. 15 ends. On the other hand, when the extracted tactile sense meta information does not exist as data registered in the tactile sense database (step S115: No), the processing proceeds to step S116.

Next, the update unit 230 determines whether or not there is the tactile sense meta information similar to any of the tactile sense meta information included in the tactile sense database among the tactile sense meta information extracted in step S113 (step S116). When it is determined that there is extracted tactile sense meta information similar to any of the tactile sense meta information included in the tactile sense database (step S116: Yes), the processing proceeds to step S117. On the other hand, when it is determined that there is no extracted tactile sense meta information similar to any of the tactile sense meta information included in the tactile sense database (step S116), the processing proceeds to step S118.

When it is determined as Yes in step S116, the update unit 230 causes the storage unit 220 to store the fact that the extracted tactile sense meta information is similar to the tactile sense meta information included in the tactile sense database (step S117).

Next, the update unit 230 updates the tactile sense database (step S118). More specifically, the update unit 230 stores the tactile sense presentation information in the tactile sense database in a state in which the tactile sense presentation information included in the server information is associated with the extracted tactile sense meta information. When the tactile sense database is updated, the update processing ends.

The processing for updating the tactile sense database has been described. As described above, according to the information processing system 1 according to the embodiment of the present disclosure, the server information of the server 10 is transmitted to the information processing apparatus 20 if necessary, and the information processing apparatus 20 updates the tactile sense database based on the server information. Therefore, as the information is accumulated in the server 10, the tactile sense database stored in the information processing apparatus 20 is updated. As a result, the information processing apparatus 20 can retrieve the tactile sense presentation information with higher accuracy, and can provide the user with information for realizing a more appropriate tactile sense.

### <3. Processing example>

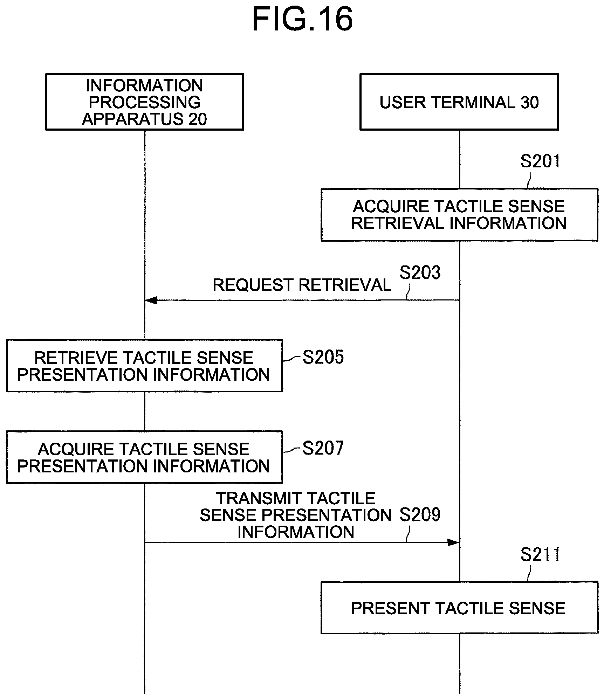

Next, a processing example until the information processing apparatus 20 retrieves the tactile sense presentation information from the tactile sense database and the user terminal 30 presents the tactile sense based on the retrieved tactile sense presentation information will be described with reference to FIGS. 16 to 20.

### <<3.1. Outline of processing example>>

First, an outline of the processing example of the information processing apparatus 20 and the user terminal 30 will be described with reference to the flowchart illustrated in FIG. 16. FIG. 16 is a flowchart illustrating the outline of the processing example of the information processing apparatus 20 and the user terminal 30 according to the embodiment of the present disclosure.

First, the user terminal 30 acquires tactile sense retrieval information (step S201). More specifically, the input unit 310 acquires tactile sense retrieval information including image information, audio information, text information, or the like by an operation of the user or the like. The acquired tactile sense retrieval information is transmitted to the communication control unit 320.

Next, the user terminal 30 requests the information processing apparatus 20 to retrieve the tactile sense presentation information (step S203). More specifically, the communication control unit 320 controls the communication unit 325 to transmit, to the information processing apparatus 20, the tactile sense retrieval information acquired in step S201 and a request signal for retrieving the tactile sense presentation information. The communication unit 325 transmits the tactile sense retrieval information and the request information to the information processing apparatus 20 via the network 40.

Next, the information processing apparatus 20 retrieves the tactile sense presentation information from the tactile sense database (step S205). More specifically, the communication unit 215 receives the tactile sense retrieval information and the request information. The received tactile sense retrieval information and request information are transmitted to the retrieval unit 240 via the communication control unit 210. Upon receiving the request information, the retrieval unit 240 retrieves the tactile sense retrieval information from the tactile sense database stored in the storage unit 220 using the transmitted tactile sense retrieval information.

Next, the information processing apparatus 20 acquires the tactile sense presentation information (step S207). More specifically, the retrieval unit 240 acquires the tactile sense presentation information retrieved in step S205.

Next, the information processing apparatus 20 transmits the tactile sense presentation information to the user terminal 30 (step S209). More specifically, the retrieval unit 240 transmits the retrieved tactile sense presentation information to the processing unit 250 or the output unit 255. The tactile sense presentation information transmitted to the processing unit 250 is subjected to various types of processing and transmitted to the output unit 255. The output unit 255 transmits, to the communication control unit 210, the tactile sense presentation information transmitted from the retrieval unit 240 or the tactile sense presentation information processed by the processing unit 250 as information related to the tactile sense presentation information. The communication control unit 210 causes the communication unit 215 to transmit information related to the retrieved tactile sense presentation information to the user terminal 30 via the network 40.

Next, the user terminal 30 presents the tactile sense (step S211). More specifically, the communication unit 325 receives information related to the tactile sense presentation information. For example, the communication control unit 320 acquires the received tactile sense presentation information and transmits the acquired tactile sense presentation information to the tactile sense presentation unit 330. The tactile sense presentation unit 330 presents a tactile sense to the user based on the transmitted tactile sense presentation information.

The outline of the processing example of the information processing apparatus 20 and the user terminal 30 according to the embodiment of the present disclosure has been described. As described above, the information processing apparatus 20 according to the embodiment of the present disclosure retrieves the tactile sense presentation information from the tactile sense database using the tactile sense retrieval information, and outputs information related to the retrieved tactile sense presentation information. As such, since the information related to the tactile sense presentation information is output based on the tactile sense presentation information retrieved using the tactile sense retrieval information, the information for realizing the tactile sense desired by the user is more appropriately provided.

In addition, in the present embodiment, the tactile sense retrieval information that is one of the text information, the image information, the audio information, and the like, or a combination of these types of information is used. As a result, the tactile sense expected by the user is more specifically expressed. As a result, more accurate retrieval for tactile sense retrieval information is performed, and information for realizing a more appropriate tactile sense is provided to the user.

### <<3.2. First specific example>>

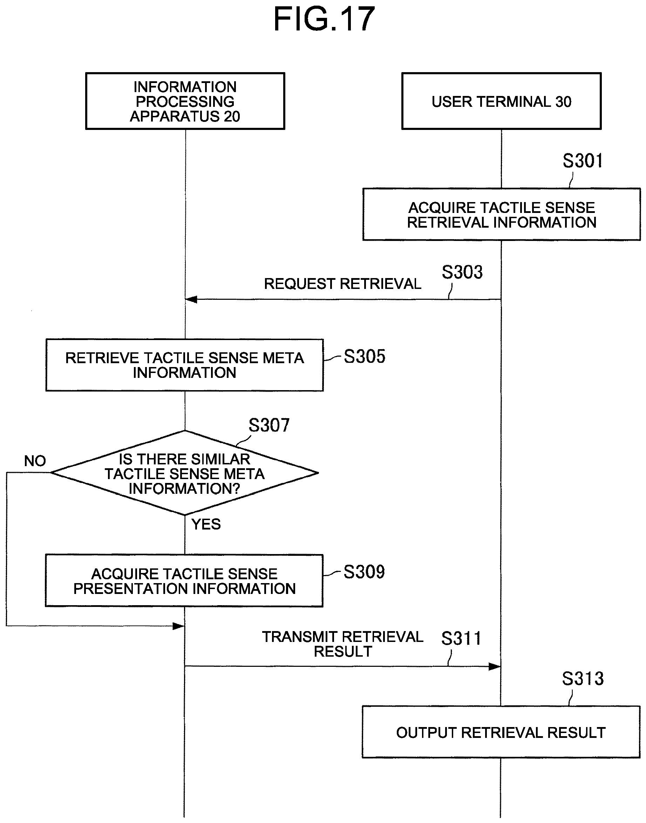

Next, a first specific example of processing by the information processing apparatus 20 and the user terminal 30 will be described with reference to FIG. 17. FIG. 17 is a flowchart illustrating a first specific example by the information processing apparatus 20 and the user terminal 30 according to the embodiment of the present disclosure. In the first specific example, a method by which the information processing apparatus 20 acquires the tactile sense presentation information will be described more specifically. Hereinafter, the first specific example will be described with reference to the flowchart illustrated in FIG. 17.

First, the processing of steps S301 and S303 is performed, but since this processing is substantially the same as the processing of steps S201 and S203 illustrated in FIG. 16, the description thereof is omitted here.

Upon completion of the processing of step S303, the information processing apparatus 20 retrieves tactile sense meta information (step S305). More specifically, the retrieval unit 240 retrieves tactile sense meta information similar to the tactile sense retrieval information from the tactile sense database.

Next, the retrieval unit 240 determines whether or not there is tactile sense meta information similar to the tactile sense retrieval information in the tactile sense database (step S307). When it is determined that there is tactile sense meta information similar to the tactile sense retrieval information (step S307: Yes), the processing proceeds to step S309. On the other hand, when it is determined that there is no tactile sense meta information similar to the tactile sense retrieval information (step S307: No), the processing proceeds to step S311.

When it is determined as Yes in step S307, the information processing apparatus 20 acquires tactile sense presentation information (step S309). More specifically, the retrieval unit 240 acquires tactile sense presentation information associated with the tactile sense meta information determined to be similar to the tactile sense retrieval information in step S307.

Next, the information processing apparatus 20 transmits the retrieval result to the user terminal 30 (step S311). More specifically, when the retrieval unit 240 has acquired the tactile sense presentation information in step S309, the retrieval unit 240 transmits the acquired tactile sense presentation information to the processing unit 250 or the output unit 255. The output unit 255 transmits information related to the tactile sense presentation information as a retrieval result to the communication control unit 210. On the other hand, when the tactile sense presentation information has not been acquired, the retrieval unit 240 transmits, to the communication control unit 320, information representing that the tactile sense presentation information has not been retrieved as the retrieval result. The communication control unit 320 controls the communication unit 325 to transmit the retrieval result to the user terminal 30. The communication unit 325 transmits the retrieval result to the user terminal 30 via the network 40.

Next, the user terminal 30 outputs the retrieval result (step S313). More specifically, the communication unit 325 receives the retrieval result and transmits the received retrieval result to the communication control unit 320. When the retrieval result includes information related to the tactile sense presentation information, the communication control unit 320 transmits the tactile sense presentation information to the tactile sense presentation unit 330. The tactile sense presentation unit 330 presents a tactile sense to the user based on the transmitted tactile sense presentation information. On the other hand, when the retrieval result does not include the information related to the tactile sense presentation information, the communication control unit 320 transmits, to the display control unit 350, information representing that the tactile sense presentation information has not been retrieved. The display control unit 350 causes the display unit 355 to display information representing that the tactile sense presentation information has not been retrieved as, for example, image information. As a result, the user can recognize that the tactile sense presentation information has not been retrieved.

The first specific example has been described with reference to FIG. 17. In the first specific example, when the tactile sense meta information similar to the tactile sense retrieval information is included in the tactile sense database, information related to the tactile sense presentation information associated with the tactile sense meta information is provided to the user. When the tactile sense retrieval information and the tactile sense meta information are similar to each other, the tactile sense presentation information associated with the tactile sense meta information may more appropriately realize the tactile sense desired by the user. Therefore, according to the first specific example, the information processing apparatus 20 can more appropriately provide information for realizing the tactile sense desired by the user. Furthermore, the user terminal 30 can more appropriately present a tactile sense desired by the user.

### <<3.3. Second specific example>>

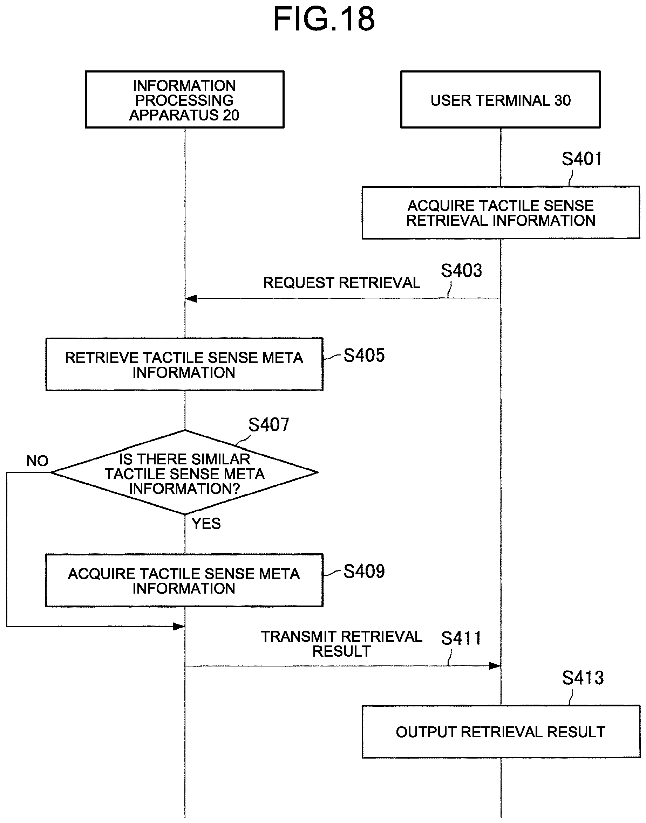

Next, a second specific example will be described with reference to FIG. 18. FIG. 18 is a flowchart illustrating the second specific example by the information processing system 1 according to the embodiment of the present disclosure. The second specific example is different from the first specific example in that the retrieval unit 240 acquires the tactile sense meta information from the tactile sense database. Hereinafter, the second specific example will be described with reference to the flowchart illustrated in FIG. 18.

First, the processing of steps S401 to S407 is performed, but since this processing is substantially the same as the processing of steps S301 to S307 illustrated in FIG. 17, the description thereof is omitted here.

When it is determined as Yes in step S407, the information processing apparatus 20 acquires tactile sense meta information (step S409). More specifically, the retrieval unit 240 acquires the tactile sense meta information determined to be similar to the tactile sense retrieval information from the tactile sense database.

Next, the information processing apparatus 20 transmits the retrieval result to the user terminal 30 (step S411). When the tactile sense meta information has been acquired in step S409, the retrieval unit 240 transmits the acquired tactile sense meta information to the communication control unit 210 as a retrieval result. On the other hand, when the tactile sense meta information has not been acquired, the retrieval unit 240 transmits, to the communication control unit 210, information representing that the tactile sense meta information has not been retrieved as the retrieval result. The communication control unit 210 transmits the transmitted retrieval result to the communication unit 215. The communication unit 215 transmits the retrieval result to the user terminal 30 via the network 40.

Next, the user terminal 30 outputs the retrieval result (step S413). More specifically, the communication unit 325 receives the retrieval result and transmits the received retrieval result to the communication control unit 320. When the retrieval result includes tactile sense meta information, the communication control unit 320 transmits the tactile sense meta information to the tactile sense presentation unit 330. Here, it is assumed that the storage unit 340 stores the tactile sense presentation information associated with tactile sense meta information. That is, it is assumed that the storage unit 340 stores a database similar to the tactile sense database stored in the information processing apparatus 20. The tactile sense presentation unit 330 retrieves the transmitted tactile sense meta information from the storage unit 340, and presents the tactile sense to the user based on the tactile sense presentation information associated with the retrieved tactile sense meta information. On the other hand, when the retrieval result does not include tactile sense meta information, the communication control unit 320 transmits, to the display control unit 350, information representing that the tactile sense presentation unit 330 does not present the tactile sense. The display control unit 350 causes the display unit 355 to display information representing that the tactile sense presentation unit 330 does not present the tactile sense based on the transmitted information. As a result, the user can recognize that the tactile sense is not presented.

The second specific example has been described with reference to FIG. 18. According to the second specific example, the retrieval unit 240 acquires the tactile sense meta information based on the tactile sense retrieval information. The tactile sense presentation unit 330 presents the tactile sense based on the tactile sense meta information. According to the second specific example, the user terminal 30 retrieves the tactile sense presentation information from the database, like the retrieval unit 240 included in the information processing apparatus 20. Therefore, in the second specific example, substantially, the user terminal 30 retrieves the tactile sense presentation information based on the tactile sense retrieval information, and outputs the retrieved tactile sense presentation information to the tactile sense presentation unit 330. In the second specific example, the information processing apparatus 20 and the user terminal 30 share the processing of retrieving tactile sense meta information similar to tactile sense retrieval information and the processing of retrieving tactile sense presentation information associated with the retrieved tactile sense meta information. As a result, the amount of processing required for the user terminal 30 to provide the tactile sense presentation information is reduced.

### <4. Application example>

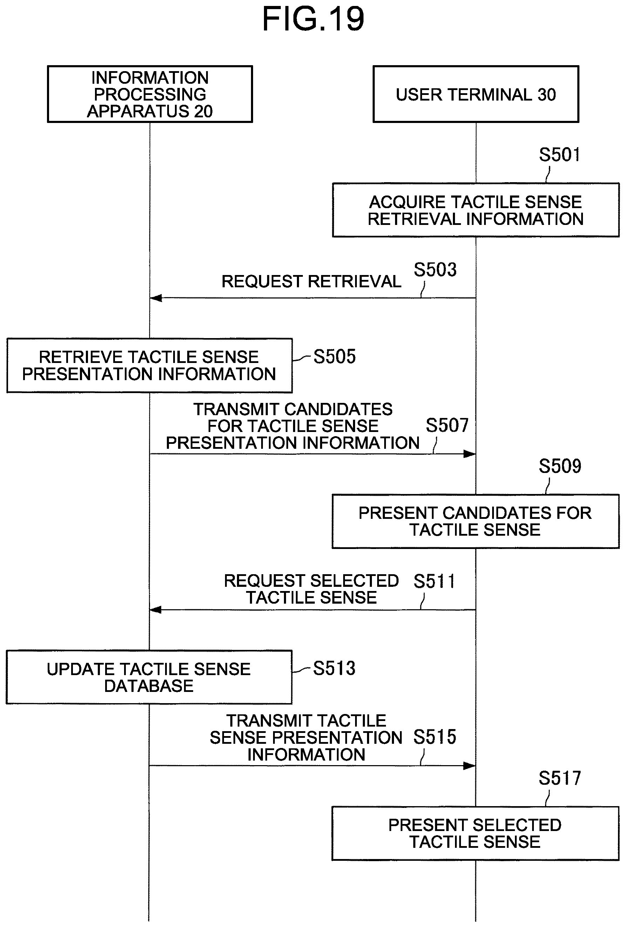

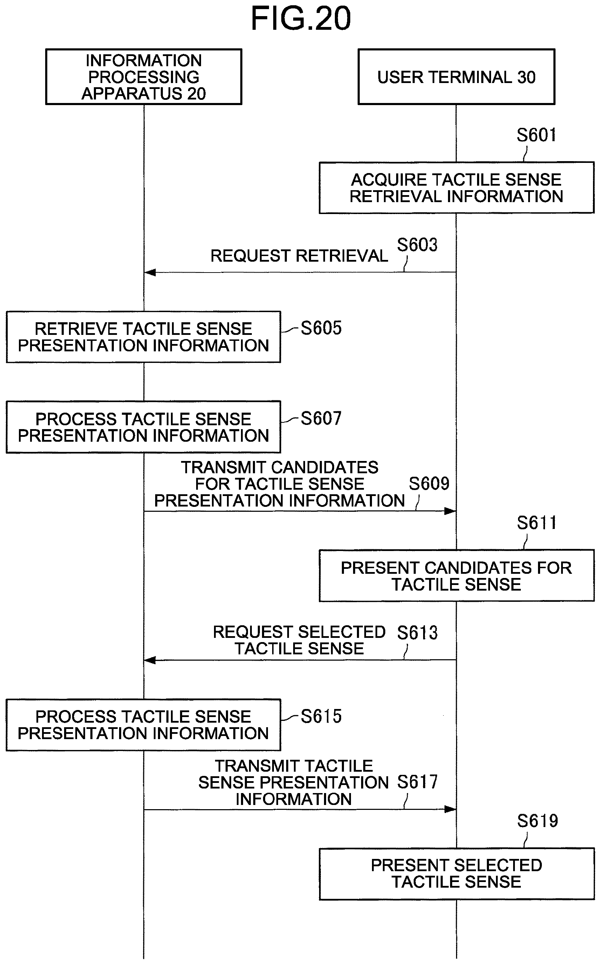

Next, an application example of processing by the information processing apparatus 20 and the user terminal 30 according to the embodiment of the present disclosure will be described with reference to FIGS. 19 and 20.

### <<4.1. First application example>>

First, a first application example of processing by the information processing apparatus 20 and the user terminal 30 according to the embodiment of the present disclosure will be described with reference to FIG. 19. FIG. 19 is a flowchart illustrating the first application example of processing by the information processing apparatus 20 and the user terminal 30 according to the embodiment of the present disclosure. Hereinafter, the first application example will be described with reference to the flowchart illustrated in FIG. 19.

First, the processing of steps S501 and S503 is performed, but since this processing is substantially the same as the processing of steps S201 and S203 illustrated in FIG. 16, the description thereof is omitted here.

Next, the information processing apparatus 20 retrieves the tactile sense presentation information (step S505). More specifically, the communication unit 215 receives the tactile sense retrieval information from the user terminal 30 and transmits the received tactile sense retrieval information to the communication control unit 210. The communication control unit 210 transmits the transmitted tactile sense retrieval information to the retrieval unit 240. The retrieval unit 240 retrieves the tactile sense presentation information from the tactile sense database by using the transmitted tactile sense retrieval information. In the first application example, the retrieval unit 240 retrieves a plurality of pieces of tactile sense presentation information. The retrieval unit 240 transmits, to the processing unit 250 or the output unit 255, the plurality of pieces of retrieved tactile sense presentation information as candidates for the tactile sense presentation information.

Next, the information processing apparatus 20 transmits the candidates for the tactile sense presentation information to the user terminal 30 (step S507). More specifically, the output unit 255 transmits, to the communication control unit 210, information related to the plurality of pieces of tactile sense presentation information as candidates for the tactile sense presentation information. The communication control unit 210 controls the communication unit 215 to transmit the transmitted candidates for the tactile sense presentation information to the user terminal 30. As a result, the candidates for the tactile sense presentation information are transmitted to the user terminal 30.

Next, the user terminal 30 outputs the candidates for the tactile sense (step S509). More specifically, the communication unit 325 receives the candidates for the tactile sense presentation information, and transmits the received candidates for the tactile sense presentation information to the communication control unit 320. The communication control unit 320 transmits the transmitted candidates for the tactile sense presentation information to the tactile sense presentation unit 330. The tactile sense presentation unit 330 presents the candidates for the tactile sense to the user, based on the transmitted candidates for the tactile sense presentation information.

Next, the user terminal 30 requests a selected candidate for the tactile sense (step S511). More specifically, the user selects a tactile sense that matches a tactile sense most desired by the user from the candidates for the tactile sense presented in step S509, and inputs information corresponding to the selected tactile sense to the input unit 310. The input unit 310 transmits the input information to the communication control unit 320. The communication control unit 320 controls the communication unit 325 to transmit information corresponding to the selected tactile sense to the information processing apparatus 20. As a result, information regarding the selected tactile sense is transmitted to the information processing apparatus 20.

Next, the information processing apparatus 20 updates the tactile sense database (step S513). More specifically, the communication unit 215 transmits information corresponding to the selected candidate for the tactile sense to the update unit 230 via the communication control unit 210. The update unit 230 updates the tactile sense database for the tactile sense presentation information for realizing the selected tactile sense. For example, the update unit 230 may store, in the tactile sense database, the tactile sense retrieval information used for the retrieval or the information extracted from the tactile sense retrieval information, as the tactile sense meta information associated with the tactile sense presentation information for realizing the selected tactile sense.

Furthermore, the update unit 230 may update the tactile sense database according to the frequency of selection of the presented tactile sense. For example, when two pieces of tactile sense presentation information retrieved based on certain tactile sense retrieval information are selected by the user at similar ratios, the update unit 230 may update the tactile sense database by increasing the tactile similarity between the two pieces of tactile sense presentation information. As a result, information for further realizing the tactile sense is more appropriately provided to the user.

Next, the information processing apparatus 20 transmits the tactile sense presentation information to the user terminal 30 (step S515). More specifically, the communication control unit 210 controls the communication unit 215 to transmit information related to tactile sense presentation information for realizing the selected tactile sense to the user terminal 30.

Next, the user terminal 30 presents the selected tactile sense (step S517). More specifically, the communication unit 325 receives information related to the tactile sense presentation information for realizing the selected tactile sense, and transmits the received information related to the tactile sense presentation information to the communication control unit 320. The communication control unit 320 transmits the transmitted information to the tactile sense presentation unit 330, and the tactile sense presentation unit 330 presents the tactile sense to the user.

In the first application example, the information processing apparatus 20 updates the tactile sense database based on a selection result of the information related to the tactile sense presentation information by the user. As a result, the tactile sense database is updated in a way that the user is more desired. As a result, information for realizing the desired tactile sense is more appropriately provided to the user.

### <<4.2. Second application example>>

Next, a second application example of processing by the information processing apparatus 20 and the user terminal 30 according to the embodiment of the present disclosure will be described with reference to FIG. 20. FIG. 20 is a flowchart illustrating the second application example of processing by the information processing apparatus 20 and the user terminal 30 according to the embodiment of the present disclosure. Hereinafter, the second application example will be described with reference to the flowchart illustrated in FIG. 20.

First, the processing of steps S601 and S603 is performed, but since this processing is substantially the same as the processing of steps S201 and S203 illustrated in FIG. 16, the description thereof is omitted here.

Upon completion of the processing of step S603, the information processing apparatus 20 retrieves tactile sense presentation information (step S605). More specifically, the communication unit 215 transmits the tactile sense retrieval information to the retrieval unit 240 via the communication control unit 210. The retrieval unit 240 retrieves a plurality of pieces of tactile sense presentation information from the tactile sense database by using the transmitted tactile sense retrieval information. The plurality of pieces of retrieved tactile sense presentation information is transmitted to the processing unit 250.

Next, the information processing apparatus 20 processes the tactile sense presentation information (step S607). More specifically, the processor 252 included in the processing unit 250 processes each of the plurality of pieces of tactile sense presentation information based on confirmation information. Here, the confirmation information is information used to convert the tactile sense presentation information into information for realizing the tactile sense for the user to confirm the tactile sense. The processor 252 creates a digest version of the tactile sense presentation information based on the confirmation information. For example, time during which the tactile sense is presented based on the digest version of the tactile sense presentation information may be shorter than time during which the tactile sense is presented based on the unprocessed tactile sense presentation information. That is, the tactile sense presented based on the processed tactile sense presentation information may be a simplified tactile sense compared to the tactile sense presented based on the unprocessed tactile sense presentation information.

Next, the information processing apparatus 20 transmits candidates for the tactile sense presentation information to the user terminal 30 (step S609). More specifically, the processing unit 250 transmits each of the plurality of pieces of processed tactile sense presentation information as a candidate for the tactile sense presentation information to the communication control unit 320 via the output unit 255. The communication control unit 320 controls the communication unit 325 to transmit the candidates for the transmitted tactile sense presentation information to the user terminal 30.

Next, the user terminal 30 presents candidates for the tactile sense (step S611). More specifically, the communication unit 325 receives the candidates for the tactile sense presentation information, and transmits the received candidates for the tactile sense presentation information to the tactile sense presentation unit 330 via the communication control unit 320. The tactile sense presentation unit 330 presents the candidates for the tactile sense to the user, based on the transmitted candidates for the tactile sense presentation information.

Next, the user terminal 30 requests the selected tactile sense from the information processing apparatus 20 (step S613). More specifically, the user selects a tactile sense that matches a tactile sense most desired by the user from the candidates for the presented tactile sense, and inputs information representing the selected tactile sense to the input unit 310. The input unit 310 transmits the input information to the communication control unit 320. The communication control unit 320 controls the communication unit 325 to transmit the transmitted information to the information processing apparatus 20.

Next, the information processing apparatus 20 processes the tactile sense presentation information (step S615). More specifically, the communication unit 215 receives the information representing the selected tactile sense, and transmits the received information to the processing unit 250 via the communication control unit 210. The processor 252 processes tactile sense presentation information for realizing the transmitted tactile sense based on use information. Here, the use information is information for processing the tactile sense presentation information into information for more appropriately realizing the tactile sense presented to the user. For example, the use information may be information for processing the tactile sense presentation information into information corresponding to the device included in the tactile sense presentation unit 330.

Next, the information processing apparatus 20 transmits the tactile sense presentation information to the user terminal 30 (step S617). More specifically, the processor 252 transmits the tactile sense presentation information processed in step S615 to the communication control unit 210. The communication control unit 210 controls the communication unit 215 to transmit the processed tactile sense presentation information to the user terminal 30.

Next, the user terminal 30 presents the selected tactile sense (step S619). More specifically, the communication unit 325 receives the tactile sense presentation information, and transmits the received tactile sense presentation information to the tactile sense presentation unit 330 via the communication control unit 320. The tactile sense presentation unit 330 presents a tactile sense to the user based on the transmitted tactile sense presentation information.

The second application example has been described with reference to FIG. 20. In the second application example, the processor 252 generates a digest version of the tactile sense presentation information, and the user terminal 30 presents the tactile sense based on the tactile sense presentation information. As a result, the data amount of the information transmitted from the information processing apparatus 20 to the user terminal 30 is reduced. Furthermore, since the presented tactile sense is simplified, the user can select the tactile sense more easily. As a result, information for realizing the tactile sense is more easily provided to the user.

### <5. Hardware configuration example>

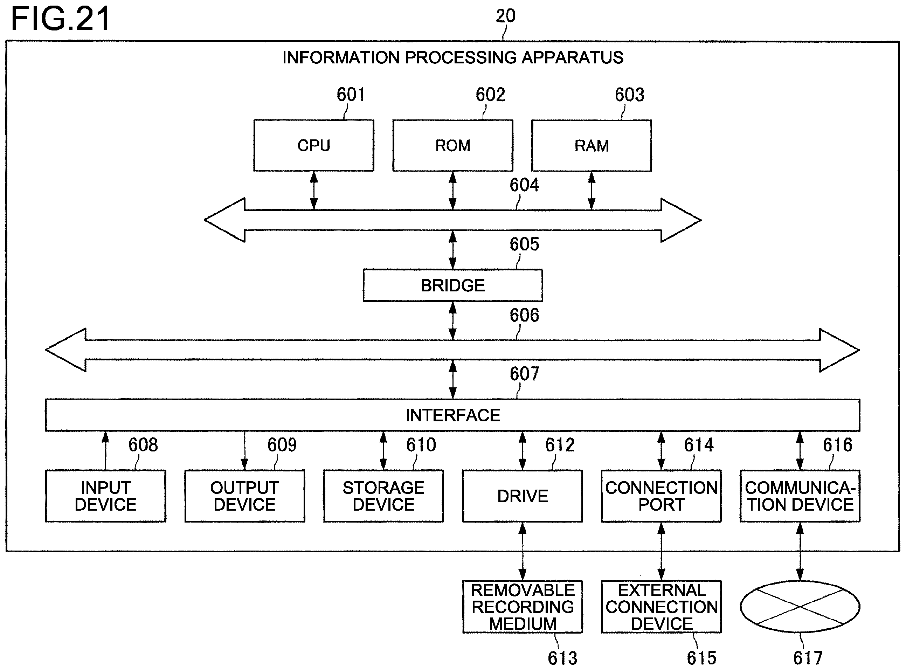

Next, an example of a hardware configuration of the information processing apparatus 20 included in the information processing system 1 according to the embodiment of the present disclosure, like the information processing apparatus 20 described above, will be described in detail with reference to FIG. 21. FIG. 21 is a functional block diagram illustrating an example of a hardware configuration of the information processing apparatus 20 included in the information processing system 1 according to the embodiment of the present disclosure.

The information processing apparatus 20 included in the information processing system 1 according to the present embodiment mainly includes a CPU 601, a ROM 602, and a RAM 603. In addition, the information processing apparatus 20 further includes a host bus 604, a bridge 605, an external bus 606, an interface 607, an input device 608, an output device 609, a storage device 610, a drive 612, a connection port 614, and a communication device 616.

The CPU 601 functions as an arithmetic processing device and a control device, and controls some or all of the operations in the information processing apparatus 20 according to various programs recorded in the ROM 602, the RAM 603, the storage device 610, or a removable recording medium 613. The ROM 602 stores programs, operation parameters, and the like used by the CPU 601. The RAM 603 primarily stores programs used by the CPU 601, parameters that appropriately change in execution of the programs, and the like. The CPU 601, the ROM 602, and the RAM 603 are mutually connected by the host bus 604 including an internal bus such as a CPU bus. For example, the communication control unit 210, the update unit 230, the retrieval unit 240, the processing unit 250, and the output unit 255 illustrated in FIG. 4 can be configured by the CPU 601.

The host bus 604 is connected to the external bus 606 such as a peripheral component interconnect/interface (PCI) bus via the bridge 605. In addition, the input device 608, the output device 609, the storage device 610, the drive 612, the connection port 614, and the communication device 616 are connected to the external bus 606 via the interface 607.

The input device 608 is an operation means operated by the user, such as a mouse, a keyboard, a touch panel, a button, a switch, a lever, or a pedal. In addition, the input device 608 may be, for example, a remote control means (so-called remote controller) using infrared rays or other radio waves, or an external connection device 615 such as a mobile phone or a PDA corresponding to the operation of the information processing apparatus 20. Furthermore, the input device 608 includes, for example, an input control circuit that generates an input signal based on information input by the user using the above-described operation means and outputs the input signal to the CPU 601, and the like. By operating the input device 608, the user of the information processing apparatus 20 can input various data to the information processing apparatus 20 and instruct the information processing apparatus 20 on processing operations.

The output device 609 includes a device capable of visually or aurally notifying the user of the acquired information. Examples of such a device include a display device such as a CRT display device, a liquid crystal display device, a plasma display device, an EL display device, or a lamp, an audio output device such as a speaker or a headphone, and a printer device. The output device 609 outputs, for example, results obtained by various types of processing performed by the information processing apparatus 20. Specifically, the display device displays results obtained by various types of processing performed by the information processing apparatus 20 as text or images. On the other hand, the audio output device converts an audio signal including reproduced audio data, acoustic data, or the like into an analog signal and outputs the analog signal. In addition, the output device 609 may be a device capable of presenting a tactile sense based on tactile sense presentation information. As a result, the user can confirm the tactile sense by using the device of the information processing apparatus 20.

The storage device 610 is a data storage device configured as an example of a storage unit of the information processing apparatus 20. The storage device 610 includes, for example, a magnetic storage unit device such as a hard disk drive (HDD), a semiconductor storage device, an optical storage device, a magneto-optical storage device, or the like. The storage device 610 stores programs executed by the CPU 601, various data, and the like. For example, the storage unit 220 illustrated in FIG. 4 can be configured by the storage device 610.

The drive 612 is a reader/writer for a recording medium, and is built in or externally attached to the information processing apparatus 20. The drive 612 reads information recorded on the mounted removable recording medium 613 such as a magnetic disk, an optical disk, a magneto-optical disk, or a semiconductor memory, and outputs the information to the RAM 603. Furthermore, the drive 612 can write a record in the mounted removable recording medium 613 such as a magnetic disk, an optical disk, a magneto-optical disk, or a semiconductor memory. The removable recording medium 613 is, for example, a DVD medium, an HD-DVD medium, a Blu-ray (registered trademark) medium, or the like. In addition, the removable recording medium 613 may be a CompactFlash (CF) (registered trademark), a flash memory, a secure digital (SD) memory card, or the like. In addition, the removable recording medium 613 may be, for example, an integrated circuit (IC) card on which a non-contact IC chip is mounted, an electronic device, or the like.

The connection port 614 is a port for directly connecting to the information processing apparatus 20. Examples of the connection port 614 include a universal serial bus (USB) port, an IEEE 1394 port, a small computer system interface (SCSI) port, and the like. Other examples of the connection port 614 include an RS-232C port, an optical audio terminal, a high-definition multimedia interface (HDMI) (registered trademark) port, and the like. By connecting the external connection device 615 to the connection port 614, the information processing apparatus 20 directly acquires various data from the external connection device 615 or provides various data to the external connection device 615.

The communication device 616 is, for example, a communication interface including a communication device or the like for connecting to a communication network (network) 617. The communication device 616 is, for example, a communication card or the like for wired or wireless local area network (LAN), Bluetooth (registered trademark), or wireless USB (WUSB). In addition, the communication device 616 may be a router for optical communication, a router for an asymmetric digital subscriber line (ADSL), a modem for various types of communication, or the like. For example, the communication device 616 can transmit and receive signals and the like to and from the Internet and other communication devices according to a predetermined protocol such as TCP/IP. Furthermore, the communication network 617 connected to the communication device 616 includes a network or the like connected in a wired or wireless manner, and may be, for example, the Internet, a home LAN, infrared communication, radio wave communication, satellite communication, or the like.

The example of a hardware configuration capable of realizing the function of the information processing apparatus 20 included in the information processing system 1 according to the embodiment of the present disclosure has been illustrated. Each of the components described above may be configured using a general-purpose member, or may be configured by hardware specialized for the function of each component. Therefore, it is possible to appropriately change the hardware configuration to be used according to the technical level at the time of carrying out the present embodiment. Although not illustrated in FIG. 21, various configurations corresponding to the information processing apparatus 20 included in the information processing system 1 are naturally included.

Note that a computer program for realizing each function of the information processing apparatus 20 included in the information processing system 1 according to the present embodiment as described above can be produced and implemented on a personal computer or the like. Furthermore, a computer-readable recording medium storing such a computer program can also be provided. The recording medium is, for example, a magnetic disk, an optical disk, a magneto-optical disk, a flash memory, or the like. In addition, the computer program described above may be distributed via, for example, a network without using the recording medium. Furthermore, the number of computers that execute the computer program is not particularly limited. For example, a plurality of computers (for example, a plurality of servers and the like) may execute the computer program in cooperation with each other.

### <6. Supplement>

Although the preferred embodiments of the present disclosure have been described in detail with reference to the accompanying drawings, the technical scope of the present disclosure is not limited to such examples. It is obvious that a person having ordinary knowledge in the technical field of the present disclosure can conceive various changes or modifications within the scope of the technical idea described in the claims, and it is naturally understood that these also belong to the technical scope of the present disclosure.

For example, in the above-described embodiment, an example in which the tactile sense database is stored in the information processing apparatus 20 has been described, but the present technology is not limited to such an example. For example, the tactile sense database may be stored in the user terminal 30. In this case, the user terminal 30 may have a function of retrieval from the tactile sense database, or the information processing apparatus 20 or the like may retrieval from the tactile sense database stored in the user terminal 30.

Furthermore, in the above-described embodiment, an example in which tactile sense presentation information is included in a content included in an SNS or the like has been described, but the present technology is not limited to such an example. For example, the content included in the SNS or the like may be used to adjust similarity between a plurality of pieces of tactile sense meta information included in the tactile sense database. For example, it is assumed that a plurality of pieces of tactile sense meta information is extracted from one content. In this case, the update unit 230 may update the tactile sense database by increasing the similarity between the extracted plurality of pieces of tactile sense meta information.

Furthermore, the effects described in the present specification are merely illustrative or exemplary, and are not restrictive. That is, the technology according to the present disclosure can exhibit other effects that are obvious to those skilled in the art from the description of the present specification together with or instead of the above effects.
(1) An information processing apparatus comprising:
   a retrieval unit that retrieves a piece of tactile sense presentation information for realizing a tactile sense presented to a user from a tactile sense database including the piece of tactile sense presentation information and one or more pieces of tactile sense meta information associated with the piece of tactile sense presentation information, based on tactile sense retrieval information used for retrieving the piece of tactile sense presentation information; and
   an output unit that outputs information related to the retrieved piece of tactile sense presentation information.
(2) The information processing apparatus according to (1), further comprising:
   an update unit that updates a relationship between two or more of a plurality of pieces of the tactile sense presentation information or a plurality of pieces of the tactile sense meta information, included in the tactile sense database.
(3) The information processing apparatus according to (2),
   wherein the update unit updates a tactile similarity between a first piece of tactile sense presentation information associated with a first piece of tactile sense meta information and a second piece of tactile sense presentation information associated with a second piece of meta retrieval information, based on a similarity between the first piece of tactile sense meta information and the second piece of tactile sense meta information.
(4) The information processing apparatus according to (3),
   wherein the update unit increases the tactile similarity between the first piece of tactile sense presentation information and the second piece of tactile sense presentation information when the first piece of tactile sense meta information and the second piece of tactile sense meta information are similar.
(5) The information processing apparatus according to any one of (2) to (4),
   wherein when a first tactile sense meta information group that is a first set of pieces of the tactile sense meta information and a second tactile sense meta information group that is a second set of pieces of the tactile sense meta information have tactile sense meta information groups similar to each other, the update unit updates the tactile sense database by associating the piece of tactile sense presentation information that is associated with the first tactile sense meta information group and that is not associated with the second tactile sense meta information group with the second tactile sense meta information group.
(6) The information processing apparatus according to any one of (2) to (5),
   wherein the update unit updates the tactile sense database based on a retrieval result by the retrieval unit.
(7) The information processing apparatus according to (6),
   wherein when the retrieval unit retrieves the plurality of pieces of tactile sense presentation information, the update unit updates the tactile sense database by increasing a tactile similarity between the plurality of pieces of tactile sense presentation information.
(8) The information processing apparatus according to any one of (2) to (7),
   wherein the update unit updates the tactile sense database based on a result of selection, by the user, of the information related to the piece of tactile sense presentation information output from the output unit.
(9) The information processing apparatus according to any one of (2) to (8), wherein the update unit updates the tactile sense database based on a frequency at which the piece of tactile sense presentation information has been adopted and the tactile sense retrieval information used for retrieving the adopted piece of tactile sense presentation information.
(10) The information processing apparatus according to any one of (1) to (9), further comprising:
   an extraction unit that extracts feature information representing a feature of the retrieved piece of tactile sense presentation information from the piece of tactile sense presentation information retrieved by the retrieval unit.
(11) The information processing apparatus according to (10),
   wherein the feature information is extracted based on the tactile sense retrieval information corresponding to the retrieved piece of tactile sense presentation information.
(12) The information processing apparatus according to (11),
   wherein the feature information is extracted based on information related to a feeling of the user included in the tactile sense retrieval information.
(13) The information processing apparatus according to (10) or (11),
   wherein when a tactile sense presented based on the piece of tactile sense presentation information is represented by a waveform having periodicity,
   the feature information is information representing one cycle of the waveform.
(14) The information processing apparatus according to any one of (1) to (13),
   wherein the tactile sense meta information includes user information related to the user.
(15) The information processing apparatus according to any one of (1) to (14),
   wherein the tactile sense meta information includes information related to a part of the user where the tactile sense is presented based on the piece of the tactile sense presentation information.
(16) The information processing apparatus according to (15), further comprising:
   a processor that processes the retrieved piece of the tactile sense presentation information into information adapted to the part of the user.
(17) The information processing apparatus according to any one of (1) to (16),
   wherein the tactile sense meta information includes tactile motion information related to a tactile motion of the user.
(18) The information processing apparatus according to any one of (1) to (17),
   wherein the tactile sense meta information includes information related to audio of the user.
(19) The information processing apparatus according to any one of (1) to (18),
   wherein the tactile sense meta information includes information related to a frequency of a signal waveform realized by the piece of the tactile sense presentation information.
(20) An information processing method comprising:
   retrieving, by a processor, a piece of tactile sense presentation information for realizing a tactile sense presented to a user from a tactile sense database including the piece of the tactile sense presentation information and one or more pieces of tactile sense meta information associated with the piece of the tactile sense presentation information, based on tactile sense retrieval information used for retrieving the piece of the tactile sense presentation information; and
   outputting, by the processor, information related to the retrieved piece of the tactile sense presentation information.
(21) A program causing a computer to function as an information processing apparatus including:
   a retrieval unit that retrieves a piece of tactile sense presentation information for realizing a tactile sense presented to a user from a tactile sense database including the piece of the tactile sense presentation information and one or more pieces of tactile sense meta information associated with the piece of the tactile sense presentation information, based on tactile sense retrieval information used for retrieving the piece of the tactile sense presentation information; and
   an output unit that outputs information related to the retrieved piece of the tactile sense presentation information.

### Reference Signs List

- 10: SERVER
- 20: INFORMATION PROCESSING APPARATUS
- 210: COMMUNICATION CONTROL UNIT
- 215: COMMUNICATION UNIT
- 220: STORAGE UNIT
- 230: UPDATE UNIT
- 240: RETRIEVAL UNIT
- 250: PROCESSING UNIT
- 255: OUTPUT UNIT
- 251: EXTRACTION UNIT
- 252: PROCESSOR
- 253: IMAGE CREATION UNIT
- 30: USER TERMINAL 30
- 310: INPUT UNIT
- 320: COMMUNICATION CONTROL UNIT
- 325: COMMUNICATION UNIT
- 330: TACTILE SENSE PRESENTATION UNIT
- 340: STORAGE UNIT
- 350: DISPLAY CONTROL UNIT
- 355: DISPLAY UNIT
- DB: TACTILE SENSE DATABASE

## Claims

1. An information processing apparatus comprising:
a retrieval unit that retrieves a piece of tactile sense presentation information for realizing a tactile sense presented to a user from a tactile sense database including the piece of tactile sense presentation information and one or more pieces of tactile sense meta information associated with the piece of tactile sense presentation information, based on tactile sense retrieval information used for retrieving the piece of tactile sense presentation information; and
an output unit that outputs information related to the retrieved piece of tactile sense presentation information.

2. The information processing apparatus according to claim 1, further comprising:
an update unit that updates a relationship between two or more of a plurality of pieces of the tactile sense presentation information or a plurality of pieces of the tactile sense meta information, included in the tactile sense database.

3. The information processing apparatus according to claim 2,
wherein the update unit updates a tactile similarity between a first piece of tactile sense presentation information associated with a first piece of tactile sense meta information and a second piece of tactile sense presentation information associated with a second piece of meta retrieval information, based on a similarity between the first piece of tactile sense meta information and the second piece of tactile sense meta information.

4. The information processing apparatus according to claim 3,
wherein the update unit increases the tactile similarity between the first piece of tactile sense presentation information and the second piece of tactile sense presentation information when the first piece of tactile sense meta information and the second piece of tactile sense meta information are similar.

5. The information processing apparatus according to claim 2,
wherein when a first tactile sense meta information group that is a first set of pieces of the tactile sense meta information and a second tactile sense meta information group that is a second set of pieces of the tactile sense meta information have tactile sense meta information groups similar to each other, the update unit updates the tactile sense database by associating the piece of tactile sense presentation information that is associated with the first tactile sense meta information group and that is not associated with the second tactile sense meta information group with the second tactile sense meta information group.

6. The information processing apparatus according to claim 2,
wherein the update unit updates the tactile sense database based on a retrieval result by the retrieval unit.

7. The information processing apparatus according to claim 6,
wherein when the retrieval unit retrieves the plurality of pieces of tactile sense presentation information, the update unit updates the tactile sense database by increasing a tactile similarity between the plurality of pieces of tactile sense presentation information.

8. The information processing apparatus according to claim 2,
wherein the update unit updates the tactile sense database based on a result of selection, by the user, of the information related to the piece of tactile sense presentation information output from the output unit.

9. The information processing apparatus according to claim 2, wherein the update unit updates the tactile sense database based on a frequency at which the piece of tactile sense presentation information has been adopted and the tactile sense retrieval information used for retrieving the adopted piece of tactile sense presentation information.

10. The information processing apparatus according to claim 1, further comprising:
an extraction unit that extracts feature information representing a feature of the retrieved piece of tactile sense presentation information from the piece of tactile sense presentation information retrieved by the retrieval unit.

11. The information processing apparatus according to claim 10,
wherein the feature information is extracted based on the tactile sense retrieval information corresponding to the retrieved piece of tactile sense presentation information.

12. The information processing apparatus according to claim 11,
wherein the feature information is extracted based on information related to a feeling of the user included in the tactile sense retrieval information.

13. The information processing apparatus according to claim 10,
wherein when a tactile sense presented based on the piece of tactile sense presentation information is represented by a waveform having periodicity,
the feature information is information representing one cycle of the waveform.

14. The information processing apparatus according to claim 1,
wherein the tactile sense meta information includes user information related to the user.

15. The information processing apparatus according to claim 1,
wherein the tactile sense meta information includes information related to a part of the user where the tactile sense is presented based on the piece of the tactile sense presentation information.

16. The information processing apparatus according to claim 15, further comprising:
a processor that processes the retrieved piece of the tactile sense presentation information into information adapted to the part of the user.

17. The information processing apparatus according to claim 1,
wherein the tactile sense meta information includes tactile motion information related to a tactile motion of the user.

18. The information processing apparatus according to claim 1,
wherein the tactile sense meta information includes information related to audio of the user.

19. The information processing apparatus according to claim 1,
wherein the tactile sense meta information includes information related to a frequency of a signal waveform realized by the piece of the tactile sense presentation information.

20. An information processing method comprising:
retrieving, by a processor, a piece of tactile sense presentation information for realizing a tactile sense presented to a user from a tactile sense database including the piece of the tactile sense presentation information and one or more pieces of tactile sense meta information associated with the piece of the tactile sense presentation information, based on tactile sense retrieval information used for retrieving the piece of the tactile sense presentation information; and
outputting, by the processor, information related to the retrieved piece of the tactile sense presentation information.

21. A program causing a computer to function as an information processing apparatus including:
a retrieval unit that retrieves a piece of tactile sense presentation information for realizing a tactile sense presented to a user from a tactile sense database including the piece of the tactile sense presentation information and one or more pieces of tactile sense meta information associated with the piece of the tactile sense presentation information, based on tactile sense retrieval information used for retrieving the piece of the tactile sense presentation information; and
an output unit that outputs information related to the retrieved piece of the tactile sense presentation information.
